# EUROPEAN PATENT APPLICATION

(11) **EP 1 126 701 A1**
(43) Date of publication of application: **22.08.2001**
(21) Application number: 99970238.4
(22) Date of filing: 29.09.1999
(51) Int. Cl.: H04N 5/445, G06F 17/30

(54) **EPG INFORMATION DISPLAY METHOD, EPG INFORMATION DISPLAY DEVICE, VIDEO RECORDING/REPRODUCING DEVICE, AND PROGRAM**

(30) Priority: 02.10.1998 JP 28177298
(71) Applicant: Matsushita Electric Industrial Co., Ltd., Kadoma-shi, Osaka-fu, 571-8501 (JP)
(72) Inventor: UENAKA, Hiroyuki, Akashi-shi, Hyogo 674-0081 (JP); TAKEDA, Hidetoshi, Hirakata-shi, Osaka 573-0065 (JP); YANAGAWA, Yoshifumi, Kyoto-shi, Kyoto 607-8345 (JP); ABE, Tetsuji, Osaka-shi, Osaka 538-0035 (JP); TADA, Chikako, Moriguchi-shi, Osaka 570-0039 (JP)
(74) Representative: Grünecker, Kinkeldey, Stockmair & Schwanhäusser Anwaltssozietät
(86) International application number: JP9905340
(87) International publication number: WO0021286

(57) **Abstract**

An EPG information display method wherein all or some of EPG information of a predetermined channel and time frame is displayed, in response to a predetermined zoom command, EPG information of channels or time frames larger or smaller in number than channels or time frames displayed immediately before the zoom command is provided is displayed, and in doing this, an amount of information in accordance with a degree of zooming is selected and displayed.

## Description

### Technical Field

The present invention relates to an EPG information display method, an EPG information display apparatus, a recorder/reproducer, and a program recording medium for displaying EPG information in television broadcasting.

### Background Art

Presently, broadcasting schedules of television programs are provided to audiences by news papers and magazines. As an alternative to news papers and magazines, an EPG (electrical program guide) has been proposed. In the future, broadcasting schedules of television programs will be provided to audiences also by use of the EPG. The EPG, which is transmitted from television stations and the like, is television program broadcasting schedule data as shown in current news papers and magazines. In the EPG, the date when the program is to be broadcast, the time frame, the channel, the title of the program, performers and the like are shown for each program.

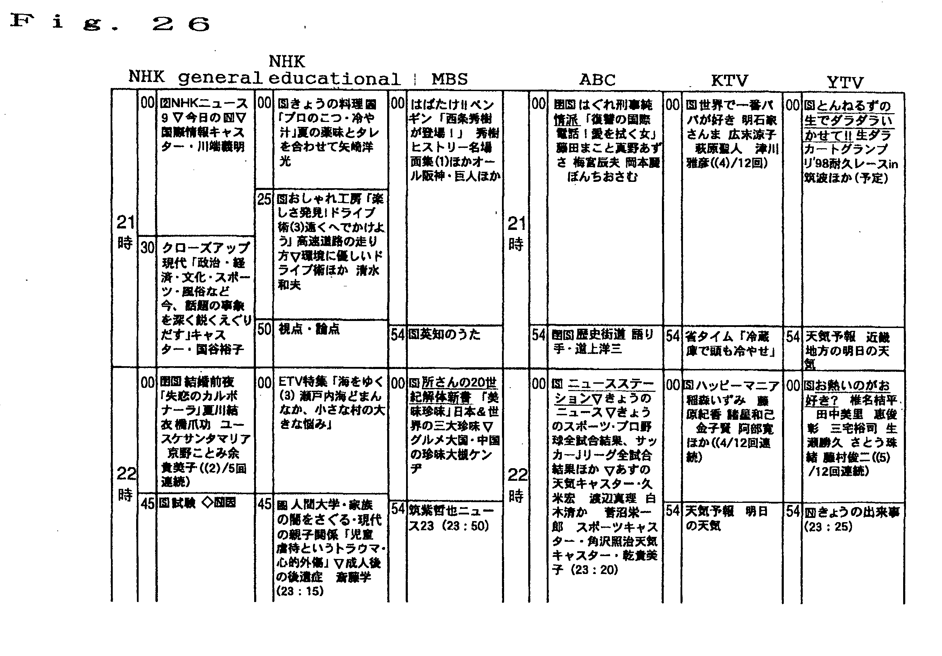

An example of the conventional EPG information display will be described with reference to FIG. 26. FIG. 26 shows the example of the conventional EPG information display. EPG information is displayed on the screen of a television receiver or a personal computer in this manner. EPG information for each channel is lined in the lateral direction. That is, EPG information is shown in the order of NHK General, NHK Educational, MBS, ABC, KTV and YTV. The time frame of the displayed EPG information is from 21 to 22 O'clock. The display screen can be scrolled by use of a remote control unit when the EPG information is displayed on the screen of a television receiver and by use of a mouse when the EPG information is displayed on the screen of a personal computer. That is, EPG information can be displayed not only for the time frame between 21 to 22 o'clock but also for any given time frame such as the time frame between 12 to 14 o'clock. Moreover, by scrolling the display screen in the lateral direction, EPG information of channels not currently shown on the screen can be displayed.

However, in the example of the conventional EPG display, the time frame of the displayed EPG information is fixed to two hours with a predetermined time as the center as described above. That is, although the EPG information of one hour both before and after the predetermined time is displayed on the screen, the EPG information of other time frames is not displayed unless the screen is scrolled, so that it is impossible to view the entire EPG. It is considered to set the time width where EPG information is displayed not to two hours but to three hours in order that as wide a range of EPG information as possible is viewed at a time. It is also considered to set the time width to five hours. However, when the time width of the displayed EPG information is increased, the space where the EPG information is displayed is decreased, so that the EPG information is difficult to view.

### Disclosure of the Invention

In view of the problem that according to the conventional EPG display method, since the time frame of the displayed EPG information is fixed, a wide range of EPG information cannot be viewed at a time and the problem that when the time width of the displayed EPG information is increased, the space where EPG information is displayed is decreased and the EPG information is difficult to view, the present invention provides an EPG information display method with which EPG information of a wide range of time frame and channels can be viewed at a time and even when a wide range of EPG information is displayed, it never occurs that the EPG information is difficult to view because of an insufficient display space.

To solve the above-mentioned problems, a first aspect of the present invention (corresponding to claim 1) is an EPG information display method wherein all or some of EPG information of a predetermined channel and time frame is displayed,
in response to a predetermined zoom command, EPG information of channels or time frames larger or smaller in number than channels or time frames displayed immediately before the zoom command is provided is displayed, and
in doing this, an amount of information in accordance with a magnification of the zoom command is selected and displayed.

A second aspect of the present invention (corresponding to claim 7) is an EPG information display method according to the first aspect of the present invention wherein for EPG information of each program displayed on the screen, an amount of EPG information to be displayed is changed according to a display area thereof.

A third aspect of the present invention (corresponding to claim 12) is an EPG information display method according to the first aspect of the present invention wherein in a case where an EPG operation function mode is a search mode, when an area in which EPG information of a program is displayed is selected and specified, the areas of programs associated with the program are shown in a different color or brightness.

A fourth aspect of the present invention (corresponding to claim 15) is an EPG information display method according to the first aspect of the present invention wherein when an EPG operation function mode is a search mode, the EPG information is displayed in a manner such that, of search results, only the programs fulfilling the search criterion are displayed so as to be close to one another in a direction of a time axis and/or a channel axis.

A fifth aspect of the present invention (corresponding to claim 16) is an EPG information display method according to the first aspect of the present invention wherein a function to operate in conjunction with a recorder is provided, and in an area in which EPG information of a program of which recording is associated with the recorder is displayed, recording condition information for the recorder is displayed so as to be superimposed on the EPG information.

A sixth aspect of the present invention (corresponding to claim 19) is a recorder/reproducer for recording and reproducing a program corresponding to EPG information displayed by an EPG information display method in which all or some of EPG information of a predetermined channel and time frame is displayed,
in response to a predetermined zoom command, EPG information of channels or time frames larger or smaller in number than channels or time frames displayed immediately before the zoom command is provided is displayed, and
in doing this, an amount of information in accordance with a magnification of the zoom command is selected and displayed, wherein in a case where an EPG operation function mode is a recording/reproduction mode, when an area in which EPG information of a program that has already been recorded is displayed is selected, reproduction of the corresponding program is started.

A seventh aspect of the present invention (corresponding to claim 20) is a recorder/reproducer for recording and reproducing a program corresponding EPG information displayed by an EPG information display method in which all or some of EPG information of a predetermined channel and time frame is displayed,
in accordance with a zoom magnification of a predetermined zoom command, EPG information of channels or time frames larger or smaller in number than channels or time frames displayed immediately before the zoom command is provided is displayed, and
in doing this, an amount of information in accordance with a degree of zooming is selected and displayed, wherein in a case where an EPG operation function mode is a recording/reproduction mode, when an area in which future EPG information is displayed is selected, timer recording of the corresponding program is programmed.

An eighth aspect of the present invention (corresponding to claim 23) is an EPG information display apparatus comprising:
zoom means;
display means where all or some of EPG information of a channel and a time frame predetermined by the zoom means is displayed, and in response to a predetermined zoom command, EPG information of channels or time frames larger or smaller than channels or time frames displayed immediately before the zoom command is provided is displayed; and
EPG information extracting means for, when EPG information is displayed, selecting and displaying an amount of information in accordance with a magnification of the zoom command of the zoom means,
wherein when the EPG information is displayed, for the predetermined channel and time frame, a picture is displayed instead of the EPG information on the display means.

### Brief Description of the Drawings

FIG. 1 is a system configuration view in first to third embodiments of the present invention.
FIG. 2 is a system configuration view in the first to the third embodiments of the present invention.
FIG. 3 is a view showing the format of EPG information stored by EPG data cell storage means in the first to the third embodiments of the present invention.
FIG. 4 is a view showing a remote control unit and key codes in the first to the third embodiments of the present invention.
FIG. 5 is a view showing a display screen and an operation of a search processing and a recording/reproduction processing performed when a currently broadcast program is selected in the second and the third embodiments of the present invention.
FIG. 6 is a view showing a display screen and an operation of a search processing and a recording/reproduction processing performed when a future program that has not been broadcast yet is selected in the second and the third embodiments of the present invention.
FIG. 7 is a view showing a display screen and an operation of a search processing and a recording/reproduction processing performed when a past program that has already been broadcast is selected in the second and the third embodiments of the present invention.
FIG. 8 is a view showing a display screen and an operation of a search processing and a recording/reproduction processing 8 performed when a program is displayed on the entire screen in the second and the third embodiments of the present invention.
FIG. 9 is a flowchart showing a processing performed when a monitor is turned on in the first embodiment of the present invention.
FIG. 10 is a flowchart showing a processing to shift a selected area leftward in the first embodiment of the present invention.
FIG. 11 is a flowchart showing a processing to shift the selected area rightward in the first embodiment of the present invention.
FIG. 12 is a flowchart showing a processing to reduce the selected area in the first embodiment of the present invention.
FIG. 13 is a flowchart showing a processing to enlarge the selected area in the first embodiment of the present invention.
FIG. 14 is a flowchart showing a processing to shift the selected area in the direction of the past in the first embodiment of the present invention.
FIG. 15 is a flowchart showing a processing to shift the selected area in the direction of the future in the first embodiment of the present invention.
FIG. 16 is a view showing an EPG display screen in a case where three channels are displayed in the first to the third embodiments of the present invention.
FIG. 17 is a view showing an EPG display screen in a case where five channels are displayed in the first to the third embodiments of the present invention.
FIG. 18 is a view showing an EPG display in a case where eleven channels are displayed in the first to the third embodiments of the present invention.
FIG. 19 is a view showing a screen where programs fulfilling the search criterion are highlighted after a link search in the second embodiment of the present invention.
FIG. 20 is a view showing a screen for selecting an external recording device for recording a program in the third embodiment of the present invention.
FIG. 21 is a view showing a screen for reproducing contents recorded on an external recording device in the third embodiment of the present invention.
FIG. 22 is a view showing a screen for performing a genre search in the second embodiment of the present invention.
FIG. 23 is a view showing a screen for programming timer recording in the third embodiment of the present invention.
FIG. 24 is a view showing a screen for programming timer watching in the third embodiment of the present invention.
FIG. 25 is a view showing a screen for choosing between timer watching and timer recording in the third embodiment of the present invention.
FIG. 26 is a view showing a conventional EPG display example.
FIG. 27 is a view showing another format of EPG information stored in the EPG data cell storage means in the first to the third embodiments of the present invention.

### (Explanation of Reference Numerals)

1 Broadcasting station
2 Tuner
3 Input switching means
4 EPG screen generating means
5 Display monitor
6 External AV device control means
7 Microcomputer
8 EPG data managing means
9 IEEE1394 digital interface
10 VTR
11 DVD
12 HDD
13 EPG data separating means
14 EPG data cell storage means
15 Program information extracting means
16 Program information search criterion input means
17 Program information cell area selecting means
18 Video data display means
19 Superimposing means
20 EPG data display means
21 External recording device control signal generating means
22 External recording device connection managing means
23 Remote control signal receiving means
24 Remote control unit

### Best Mode for Carrying Out the Invention

### (Embodiment 1)

Hereinafter, a first embodiment of the present invention will be described with reference to the drawings.

In this embodiment, a case will be described where various operations such as enlarging and reducing EPG screen displays by performing zoom processing are performed.

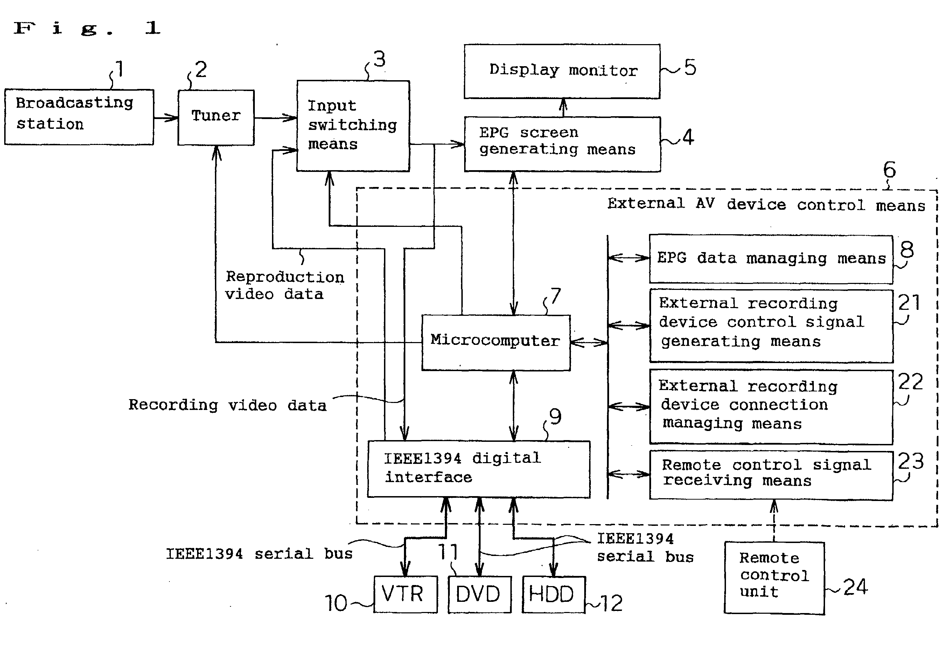

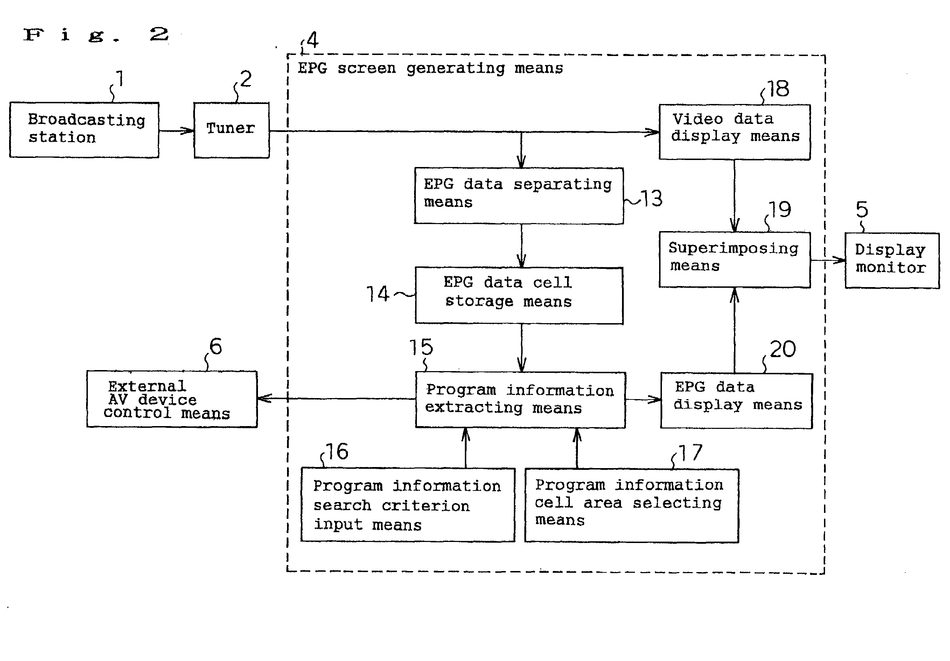

FIGs. 1 and 2 show system configurations. First, the configuration of this embodiment will be described with reference to FIG. 1. A broadcasting station 1 is means for transmitting television programs and EPG information. A tuner 2 is means for receiving the television programs and the EPG information transmitted from the broadcasting station 1. While the tuner 2 is illustrated as one block in this figure, various types of plural tuners are disposed in view of the configuration of the screen. For the channel selection by the tuner 2, an instruction is transmitted from a microcomputer 7. Input switching means 3 is means for switching between input of the television programs and the EPG information transmitted from the tuner 2 and input of reproduction video data transmitted from an external AV device connected through an IEEE1394 serial bus. Selection of the input signal of the input switching means 3 is controlled by the microcomputer 7 provided in external AV device control means 6. These instructions are provided by the user with an external remote control unit 24. The control signal thereof is transmitted to the microcomputer 7 through remote control signal receiving means 23. EPG screen generating means 4 is means for generating EPG screen by using as the input the television programs and the EPG information transmitted from the input switching means 3 and the reproduction video data transmitted from an external AV device, and for generating information for controlling the external device by the external AV device control means 6. The configuration of the EPG screen generating means 4 will be described later. A display monitor 5 is means for displaying EPG information, television programs and reproduction video data. The external AV device control means 6 is means for controlling an external device such as a VTR 10, a DVD 11 or an HDD 12 connected through an IEEE1394 serial bus in order to obtain video data by reproducing the external AV device and to record video data onto the external AV device.

The external AV device control means 6 is configured as follows: Processings of various means described below are performed by the microcomputer 7 on the EPG data received from the EPG screen generating means 4. The means are: EPG data managing means 8 for managing the EPG data received from the EPG screen generating means 4 as program information and associating it with an external recording device; external recording device control signal generating means 21 for generating a signal to control a recording device through the IEEE1394 serial bus; and external recording device connection managing means 22 for managing the protocol of connection with an external recording device through the IEEE1394 bus. An IEEE1394 digital interface 9 is an interface for external recording devices such as the VTR 10, the DVD 11 and the HDD 12 connected through the serial bus based on the IEEE1394-1995 standard. The input and output of AV data and the exchange of control commands are performed through the microcomputer 7.

Next, as mentioned above, the configuration of the EPG screen generating means 4 will be described with reference to FIG. 2. EPG data separating means 13 is means for separating and extracting EPG data from the television programs and the EPG data transmitted from the broadcasting station 1. EPG data cell storage means 14 is means for converting into a data base the data format of the EPG data separated and extracted by the EPG data separating means 13 and storing it in a memory or a recording medium (not shown). Program information extracting means 15 is means for extracting information necessary for display on the display monitor 5 from the EPG data stored in the EPG data cell storage means 14 or extracting information for controlling an external recording device and outputting the extracted information to the external AV device control means 6, or for receiving data necessary for displaying the EPG data from the external AV device control means 6. Program information search criterion input means 16 is means for inputting a search criterion for performing a search by the program information extracting means 15. As a device for inputting the search criterion, an input device such as a remote control unit, a keyboard or a mouse is used (not shown). Program information cell area selecting means 17 is means for selecting program information for extracting information necessary for display on the display monitor 5 by the program information extracting means 15. Video data display means 18 is means for displaying video data such as a television program received by the tuner 2. Superimposing means 19 is means for displaying video data and EPG data on the display monitor 5 so as to be superimposed one on another. EPG data display means 20 is means for displaying EPG data. In this embodiment, the program information cell area selecting means 17 can change the zoom size of the display by deciding three kinds of selection area sizes of several patterns in advance on the apparatus side and selecting the pattern of a selection area with an input device such as a remote control unit, a keyboard or a mouse (not shown) and moving the selected one. In the description given below, the operation will be described by use of an example using a remote control unit as the input device.

Next, the operation of this embodiment as described above will be described.

First, the data stored by the EPG data cell storage means 14 of FIG. 2 will be described. The EPG information transmitted from the broadcasting station 1 is received by the tuner 2, and after the EPG data is separated and extracted from the program data by the EPG data separating means 13, the data is stored by the EPG data cell storage means 14 which is a constituent of the EPG screen generating means 4.

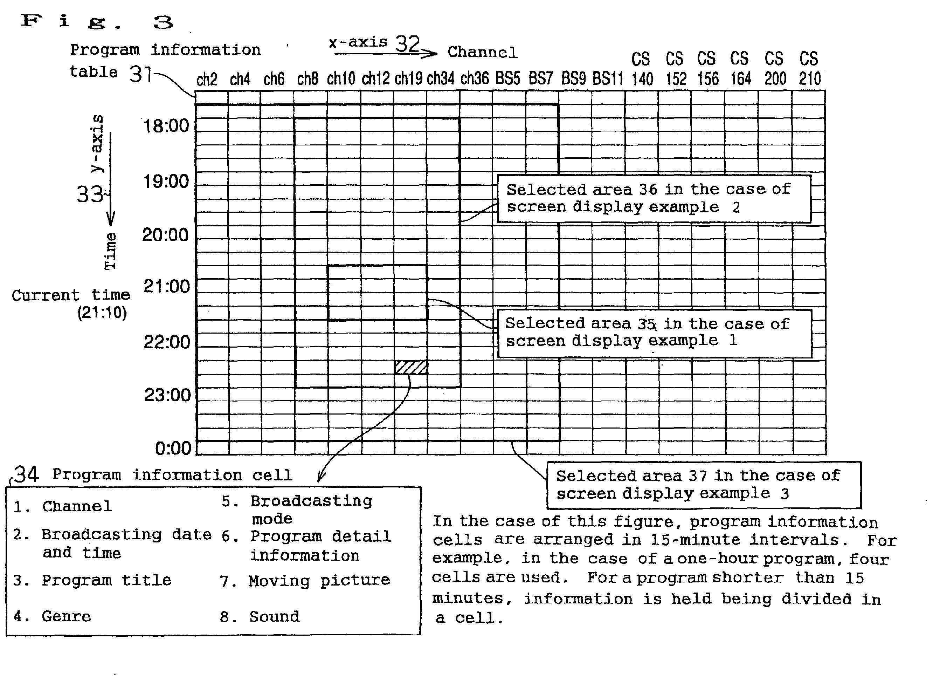

The format of the EPG data at this time is stored in the form of a program information table 31 as shown in FIG. 3. That is, an X-axis 32 is set in the lateral direction of the table, and a Y-axis 33 is set in a direction perpendicular thereto. The X-axis 32 represents channels. The Y-axis represents time. For each channel, time is divided into program information cells 34 each corresponding to 15 minutes. The program information cells 34 have information as described in FIG. 3, that is, the channel, the broadcasting date and time, the program title, the genre, the broadcasting mode, the program detail information, the moving picture and the sound. These are data transmitted from the broadcasting station. Here, the channel is the channel on which the program registered in a program information cell is broadcast. The broadcasting date and time are the date and time when the program starts and the date and time when the program ends. The program title is the title of the program. The genre is the category to which the program belongs. Programs can be classified, for example, into "sport", "movie", "drama" and "news". In the program information cells, these categories have subdivided information as necessary, for example, the broad category "sports", the middle category "baseball" and the narrow category "professional". The broadcasting mode is the kind of broadcasting indicating that the program is "bilingual broadcasting", "teletext" or "wide-screen broadcasting". The program detail information is a detailed description such as the highlight, the story, the performers and the like of the program. The moving picture is video data of the highlight of the program stored as a moving picture for describing the program. The sound is the highlight of the program stored as sound data for describing the program. Data as described above are stored in the program information cells 34.

In the program information cells, the above-described various pieces of information are stored in an address space disposed on a memory (not shown) included in the EPG data cell storage means 14 for each cell. A table indicating where the program information cells are situated is also provided. The table is stored as data formed into a database.

Programs shorter than 15 minutes are stored in one program information cell in a plurality of numbers. That is, when a program A and a program B are stored in one program information cell because of the broadcasting times thereof, the one cell holds the EPG information of the programs A and B. On the contrary, when one program C is longer than 15 minutes, the information of the same program is stored in a plurality of program information cells in the following manner: In the memory address space corresponding to the program information cell at the beginning of the program (head program information cell), various pieces of program information are stored, and in the memory address space corresponding to the succeeding program information cell, pointer information is stored showing the memory address of the head program information cell in which the program information is stored. Needless to say, information the same as that stored in the head program information cell may be stored. In that case, however, the necessary memory space is larger.

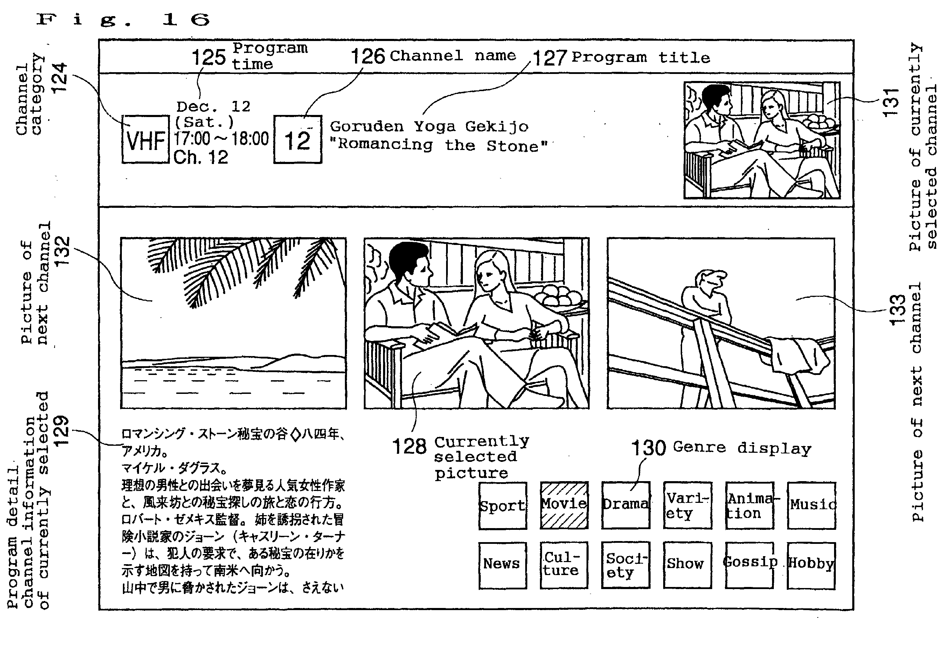

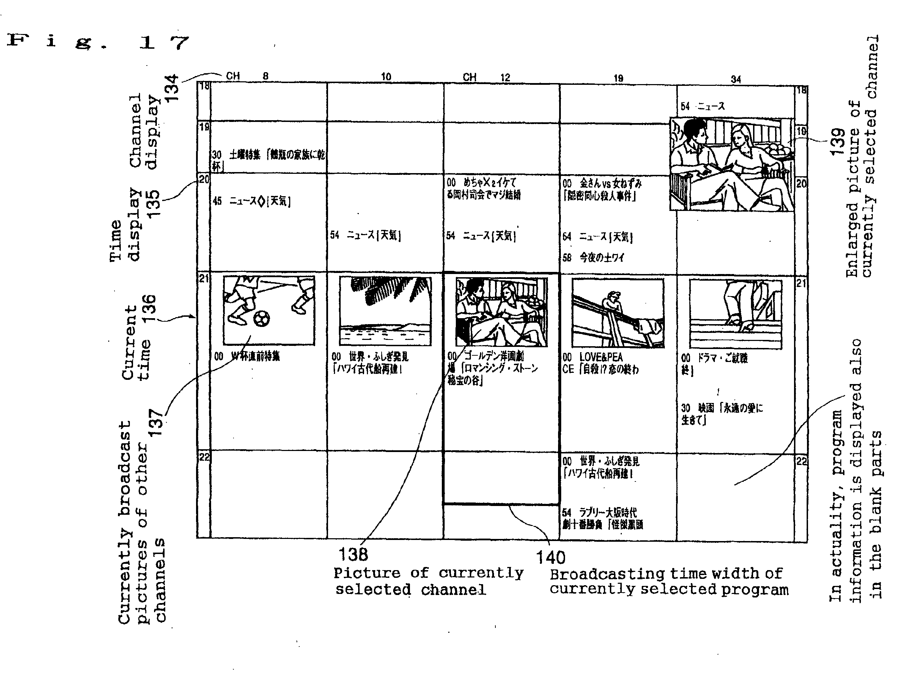

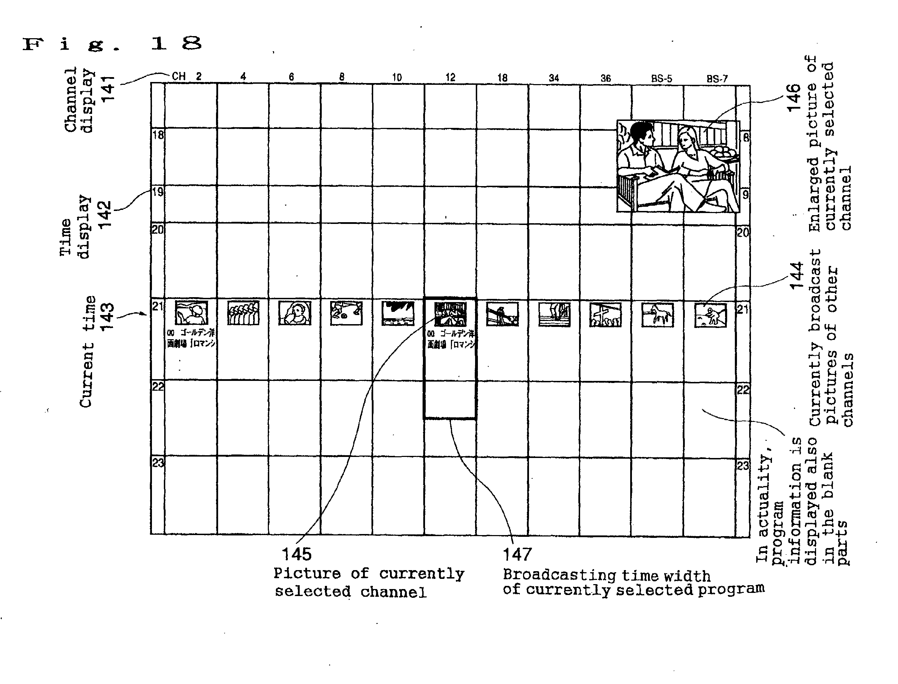

Assume that a program C is a one-hour program. In this case, the EPG information of the program C is quadruply stored in four program information cells. By holding EPG information in units of 15 minutes as described above, handling of EPG information is facilitated. That is, as described later, for the program information cells selected in a selected area 35 in the case of a screen display example 1, the EPG information being present in the rectangular area thereof is displayed on the display monitor 5 as shown in FIG. 16. For the program information cells selected in a selected area 36 in the case of a screen display example 2, the EPG information being present in the rectangular area thereof is displayed on the display monitor 5 as shown in FIG. 17. For the program information cells selected in a selected area 37 in the case of a screen display example 3, the information being present in the rectangular area thereof is displayed on the display monitor 5 as shown in FIG. 18.

By use of data as described above, the EPG screen generating means 4 generates various EPG screens. That is, with reference to the information in the EPG data cell storage means 14 in which the EPG information separated by the EPG data separating means 13 is stored in a specific data format, the program information extracting means 15 changes the EPG information display method based on an area such as the selected area 35 in the case of the screen display example 1 (hereinafter, referred to as EPG 3) of FIG. 16 input from the program information cell area selecting means 17, the selected area 36 in the case of the screen display example 2 (hereinafter, referred to as EPG 5) of FIG. 17 and the selected area 37 in the case of the screen display example 3 (hereinafter, referred to as EPG 11) of FIG. 18. The program information extracted by the program information extracting means 15 is displayed by the EPG display means 20, and the program of the current time frame transmitted from the tuner 2 is displayed simultaneously with the EPG information by the video data display means 18. That is, the picture of the current time frame and the EPG information are displayed on the display monitor 5 so as to be superimposed one on another by the superimposing means 19.

As described above, display examples where EPG information is displayed include the following three:

A first display example is the display screen EPG 3 in a case where an area constituted by program information cells is selected in the program information table of FIG. 3 like the selected area 35 in the case of the screen display example 1. That is, the selected area 35 is a specification of the zoom amount for the screen display in units of channels and time frames. In this case, the display screen is as shown in FIG. 16. In FIG. 16, EPG information of three channels is displayed. In FIG. 16, a channel category 124 indicates the categories of the channels of broadcasting stations such as the frequency band, cable broadcasting, satellite broadcasting or pay broadcasting. Aprogramtime 125 includes the date, the time and the day of the week when the program is broadcast, the broadcasting start time, the broadcasting end time and the channel. A channel name 126 indicates the channel number and the name of the broadcasting station as an icon. A program title 127 is the title of the currently selected program. A currently selected picture 128 is the program situated in the center of the area selected in the program information table of FIG. 3. In the current screen, Goruden Yoga Gekijo (Golden Foreign Movie Theater) "Romancing the Stone" is currently selected, and the picture thereof is shown. Program detail information 129 of the currently selected channel shows a detailed description of the currently selected program Goruden Yoga Gekijo "Romancing the Stone". A genre 130 shows the genre of the currently selected program. Since the genre of the currently selected program is movie, the part of movie is displayed in a different color. A picture 131 of the currently selected channel shows the program currently broadcast on the currently selected channel. A picture 132 of the next channel shows the picture of the program corresponding to the program information cell to the left of the program information cell currently selected in FIG. 3. A picture 133 of the next channel is the picture of the program corresponding to the program information cell to the right of the program information cell currently selected in FIG. 3. This is the display screen corresponding to the selected area 35 in the case of the screen display example 1. This screen is generated by the EPG screen generating means 4 in the following manner:

The EPG screen generating means 4 informs the microcomputer 7 provided in the external AV device control means 6 of the channel number information being present in the selected area 35 selected by the program information cell area selecting means 17, that is, channels 10, 12 and 19 in this case, through the program information extracting means 15.

The microcomputer 7 performs channel selection so that the video data of channels 10, 12 and 19 are output from the tuner 2. The display size and the layout of the video data from the tuner 2 are decided so that the picture of channel 12 is shown in the center and at the upper right of the display screen, the picture of channel 10 is shown to the left thereof and the picture of channel 19 is shown to the right thereof.

The EPG data of the programs selected by channels 10, 12 and 19 are extracted by the program information extracting means 15, and the information is transmitted to the EPG data display means 20. The EPG data display means 20 displays contents such as the title of the program being broadcast on channel 12 shown in the center of the display screen, the broadcasting date and time and the channel category at the top of the display screen, and displays the program detail information and the genre in the lower left of the display screen.

Such an overall layout of the display screen is previously associated with the area selected by the program information cell area selecting means 17. In accordance with the association, the layout is decided by the video data display means 18 and the EPG data display means 20, and the display screen is configured by the superimposing means 19 and output to the display monitor 5.

When the currently selected picture 128 is a future program that has not been broadcast yet or a past program that has already been broadcast, the moving picture data and the sound data held in the program information cell 34 are displayed in the part of the currently selected picture 128. That is, the highlight of the selected program is shown. Likewise, in the parts of the pictures 132 and 133 of the next channels, the highlights of the programs such as moving picture data and sound data are shown. However, even when a future program or a past program is selected, the program, of the current time, of the selected channel is shown in the part of the picture 131 of the currently selected channel.

A second display example is the display screen EPG 5 in a case where an area constituted by program information cells is selected in the program information table of FIG. 3 like the selected area 36 in the case of the screen display example 2. In this case, the display screen is as shown in FIG. 17. In this case, EPG information of five channels is displayed. That is, the screen is zoomed out compared to the first display example (FIG. 16), and by specifying the selected area 36 so as to be larger than the selected area 35, the zoom amount for displaying EPG information is reduced.

A channel display 134 shows channels in the horizontal direction. A time display 135 shows times in the vertical direction. In a current time 136, the picture of the program being broadcast in the current time frame is shown for each channel. That is, currently broadcast pictures 137 of other channels and a picture 138 of the currently selected channel in the center of the current time 136 are displayed so as to be superimposed on the program information. The picture 138 of the currently selected channel is displayed as an enlarged picture 139 of the currently selected channel at the upper right of the display screen. In the boxes of programs of the future and the past other than the current time frame, program information is displayed as shown in the figure. Although omitted to avoid complication, in actuality, program information is also displayed in the blank parts of FIG. 17. The broadcasting time frame of the currently selected program can be found from a broadcasting time width 140 of the currently selected program. When the picture 138 of the currently selected channel is the picture of a future program that has not been broadcast yet or a past program that has already been broadcast, the moving picture data and the sound data held in the program information cell 34 are displayed in the part of the picture 138 of the currently selected channel. That is, the highlight of the selected program is displayed. Likewise, in the parts of the currently broadcast pictures 137 of the other channels, the highlights of the programs such as moving picture data and sound data are shown. However, even when a future program or a past program is selected, the program, of the current time, of the selected channel is shown in the part of the enlarged picture 139 of the currently selected channel.

A third display example is the display screen EPG 11 in a case where an area constituted by program information cells is selected in the program information table of FIG. 3 like the selected area 37 in the case of the screen display example 3. In this case, the display screen is as shown in FIG. 18.

That is, since the selected area 37 is specified so as to be larger than the selected area 35 or 36, the zoom amount for displaying EPG information is further reduced.

In this case, EPG information of eleven channels is displayed on the screen. That is, the screen is zoomed out compared to the second display example (FIG. 17). A channel display 141 shows channels in the horizontal direction. A time display 142 shows times in the vertical direction. In a current time 143, the picture of the program being broadcast in the current time frame is shown for each channel. That is, currently broadcast pictures 144 of other channels and a picture 145 of the currently selected channel in the center of the current time 143 are displayed so as to be superimposed on the program information. The picture 145 of the currently selected channel is displayed as an enlarged picture 146 of the currently selected channel at the upper right of the display screen. In the boxes of programs of the future and the past other than the current time 143, although omitted to avoid complication, in actuality, program information is also displayed in the blank parts of FIG. 17. The broadcasting time frame of the currently selected program can be found from a broadcasting time width 147 of the currently selected program. When the picture 145 of the currently selected channel is a future program that has not been broadcast yet or a past program that has already been broadcast, the moving picture data and the sound data held in the program information cell 34 are displayed in the part of the picture 145 of the currently selected channel. That is, the highlight of the selected program is displayed. Likewise, in the parts of the currently broadcast pictures 144 of the other channels, the highlights of the programs such as moving picture data and sound data are shown. However, even when a future program or a past program is selected, the program, of the current time, of the selected channel is shown in the part of the enlarged picture 146 of the currently selected channel.

In the second display example EPG 5 (FIG. 17) and the third display example EPG 11 (FIG. 18), the intervals between calibration markings of the time display 135 and the time display 142 differ according to the time. This is done because it is considered that the genres of broadcast programs tend to differ according to the time frame and the display amount of EPG information differs according to the genre. For example, the display amount of EPG information is small for news programs, whereas the display amount of EPG information is large for dramas because description of the story and the like is included. By previously assigning weights to the width according to the time frame where the EPG information is displayed as described above, necessary information can be obtained in more detail.

The items of the EPG information displayed in the first display example EPG 3 (FIG. 16), the second display example EPG 5 (FIG. 17) and the third display example (FIG. 18) are different from one another. That is, in the first display example EPG 3 (FIG. 16) being enlarged, the largest number of items of EPG information are displayed, in the second display example EPG 5 (FIG. 17), the next largest number of items are displayed, and in the third display example EPG 11 (FIG. 18) which is reduced, the number of displayed items of EPG information is the smallest. This can be realized by deciding, by the program information extracting means 15 of FIG. 2, the displayed items of EPG information in consideration of the size of the area in which EPG information is to be displayed, the number of pixels in displaying the area and the number of letters that can be shown in the area.

For example, in the case of the EPG 3, the EPG information of the program displayed in the center of the screen is all displayed, whereas in the case of the EPG 5, since the display area per program is smaller, only the video data and the program title are displayed. In the EPG 11, only the program title is displayed to the middle because of limitation of the number of letters.

In this case, priorities are previously assigned to the information held in the program information cells 34 of FIG. 3, and the displayed items of EPG information are decided in accordance with the order of priority. For example, a case can be considered where priorities are assigned in the order of the program title, the channel, the broadcasting date and time, the program detail information, the broadcasting mode, the genre, the moving picture and the sound. Or, in the case of this embodiment, since EPG information is displayed at three magnifications of the first to the third display examples, it is possible to previously decide the items of EPG information displayed on the three sizes of screens.

Next, the operation for shifting among the first display example EPG 3 (FIG. 16), the second display example EPG 5 (FIG. 17) and the third display example EPG (FIG. 18), and the operation for display processings thereof will be described. Since these operations are performed by use of the remote control unit 24, the configuration of the remote control unit 24 will be described first.

The remote control unit 24 shown in FIG. 1 uses infrared rays. The control code corresponding to each button of the remote control unit 24 is transmitted to the remote control signal receiving means 23 provided in the external device control means 6. The remote control signal receiving means 23 transmits the received control code to the microcomputer 7. The microcomputer 7 provides an instruction to perform the control described below.

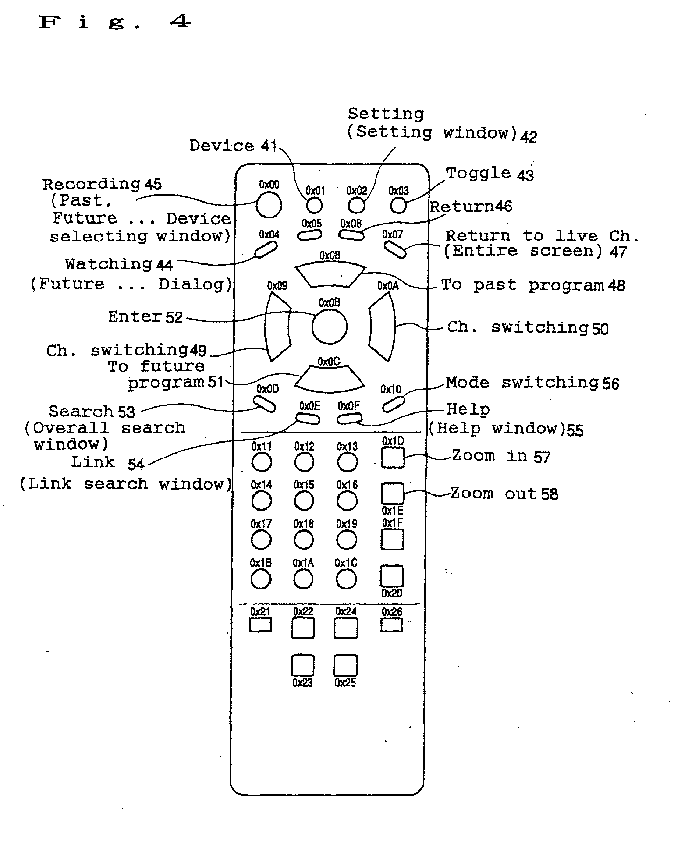

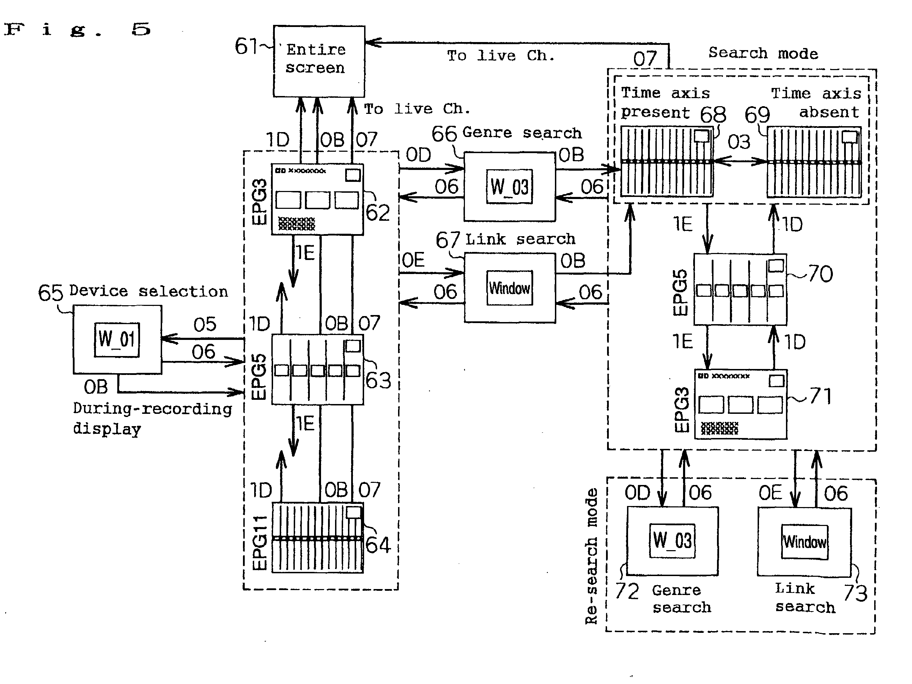

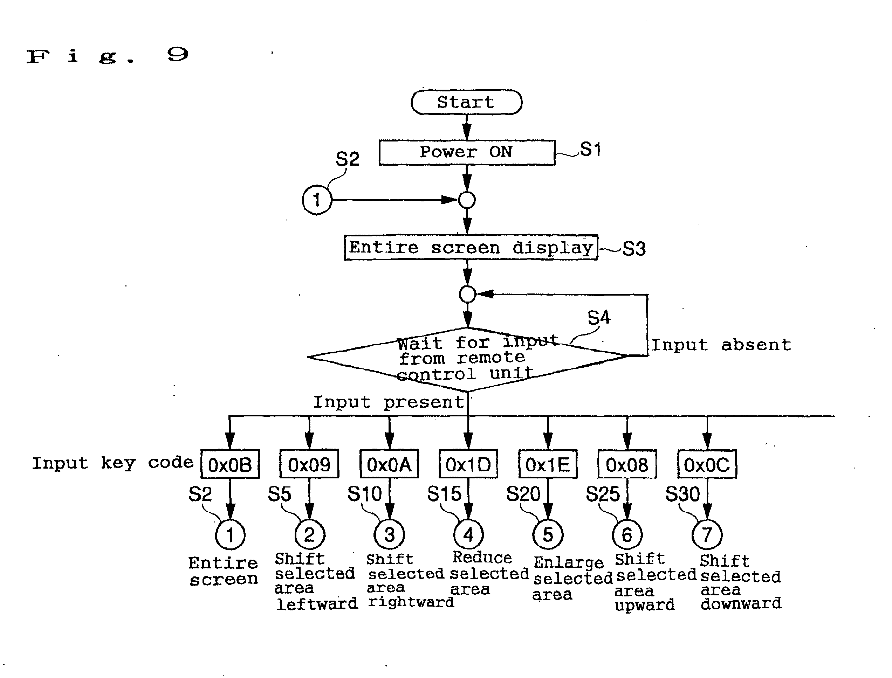

The remote control unit for operating the EPG display screen will be described with reference to FIG. 4. By using such a remote control unit, change of the display method of the EPG display screen, selection of the program, recording and reproduction using an external device, search and the like can be performed with an easy operation. The hexadecimal numbers above the buttons of the remote control unit in FIG. 4 are key codes representing the buttons, and are used for subsequently-described operation flows (FIGS. 5 to 8) and flowcharts (FIGs. 9 to 15) in common.

Subsequently, the buttons of the remote control unit will be described.

Device 41 is a button for selecting any one of the devices in order to use an external recording device such as the VTR 10, the EVE 11 and the HDD 12. Toggle 43 is a button for switching between two window display methods. Watching 44 is a button for programming timer watching. Recording 45 is a button for programming timer recording. Return 46 is a button for returning the processing at the remote control unit to the previous condition. Return to live Ch. 47 is a button for returning the display screen to the condition where one program is displayed on the entire screen. To past program 48 is a button for moving the EPG information in the direction of the past when EPG information is displayed, and displaying the EPG information of the past. Ch. switching 49 is a button for switching the channel to the one on the left when EPG information is displayed. Ch. switching 50 is a button for switching the channel to the one on the right when EPG information is displayed. To future program 51 is a button for moving the EPG information in the direction of the future when EPG information is displayed, and displaying the EPG information of the future. Enter 52 is a button for entering the processing of the operation of the remote control unit. Search 53 is a button for searching the entire EPG information for programs fulfilling the search criterion. Link 54 is a button for searching the entire EPG information for programs linked with the currently selected program. Zoom in 57 is a button for enlarging the EPG display screen. Zoom out 58 is a button for reducing the EPG display screen.

The buttons of Ch. switching 49, Ch. switching 50, to past program 48, to future program 51 and enter 52 also have a function to move the cursor shown on the display monitor 5 to select the item where the cursor is placed. This will be described later. The configurations of the buttons of the remote control unit have been described.

Next, an operation for display processing to change the display on the screen will be described.

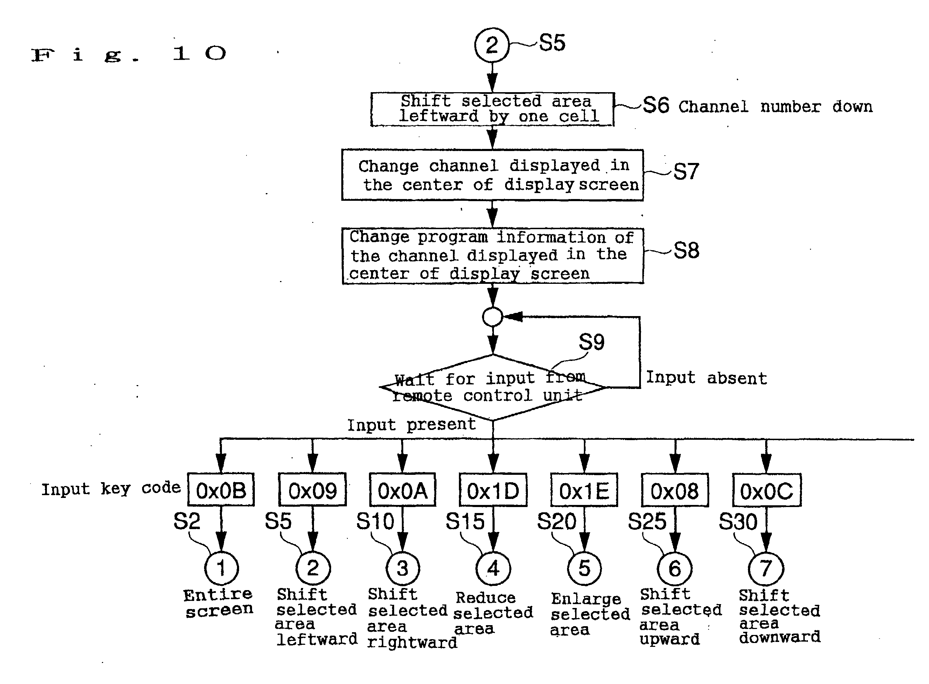

FIG. 9 shows the flow of a display screen processing performed when the television receiver is turned on. First, when the television receiver is turned on (S1), an entire screen display is provided on the screen (S3). At this time, the program, of the current time, of a channel previously selected when the power is turned on is displayed on the entire screen. The user can watch the selected television program. Then, when an input is made at the remote control unit at "wait for input from remote control unit" (S4), the process shifts to the flowcharts of FIGs. 10 to 15.

When "shift selected area leftward" (S5) is selected at "wait for input from remote control unit" (S4), that is, when the button of Ch. switching 49 is depressed at the remote control unit, the selected area of the program information cells in FIG. 3 is scrolled leftward. That is, in the flowchart of FIG. 10, the selected area is shifted leftward by one cell (S6). Then, the channel displayed in the center of the screen is changed (S7). Then, the program information of the channel displayed in the center of the screen is changed (S8). When the above-described processing is finished, the screen has been scrolled by one channel along the channel axis in a direction in which the channel number decreases, that is, leftward. Then, the process shifts to "wait for input from remote control unit" (S9). When an input is made at the remote control unit, the process shifts to the flowcharts of FIGs. 10 to 15.

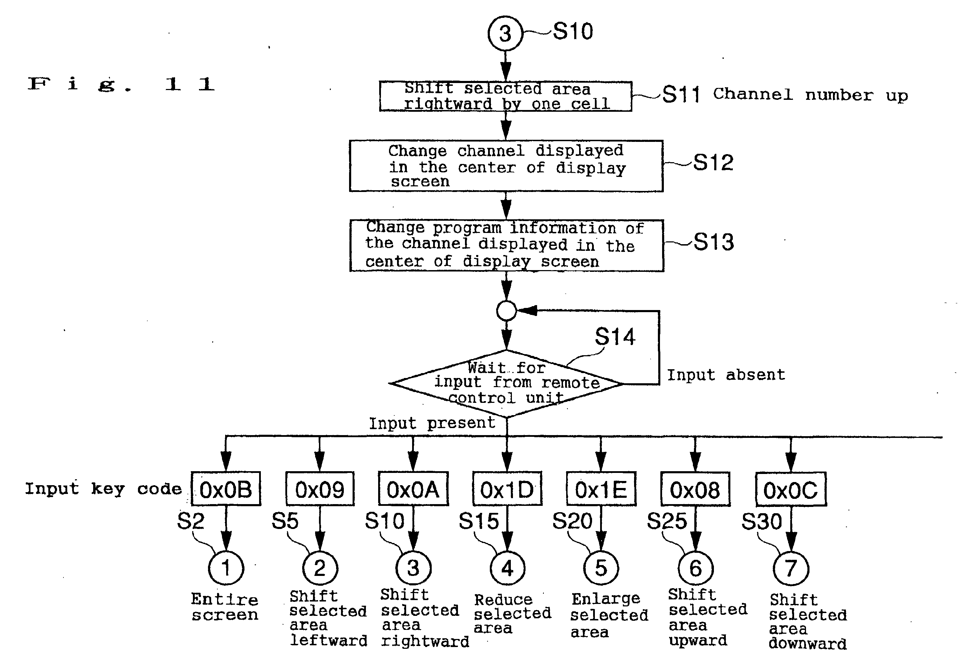

When "shift selected area rightward" (S10) is selected at "wait for input from remote control unit" (S4), that is, when the button of Ch. switching 50 is depressed at the remote control unit, the selected area in FIG. 3 is scrolled rightward. That is, in the flowchart of FIG. 11, the selected area is shifted rightward by one cell (S11). Then, the channel displayed in the center of the screen is changed (S12). Then, the program information of the channel displayed in the center of the screen is changed (S13). When the above-described processing is finished, the screen is scrolled by one channel along the channel axis in a direction in which the channel number increases, that is, rightward. Then, the process shifts to "wait for input from remote control unit" (S14). When an input is made at the remote control unit, the process shifts to the flowcharts of FIGs. 10 to 15.

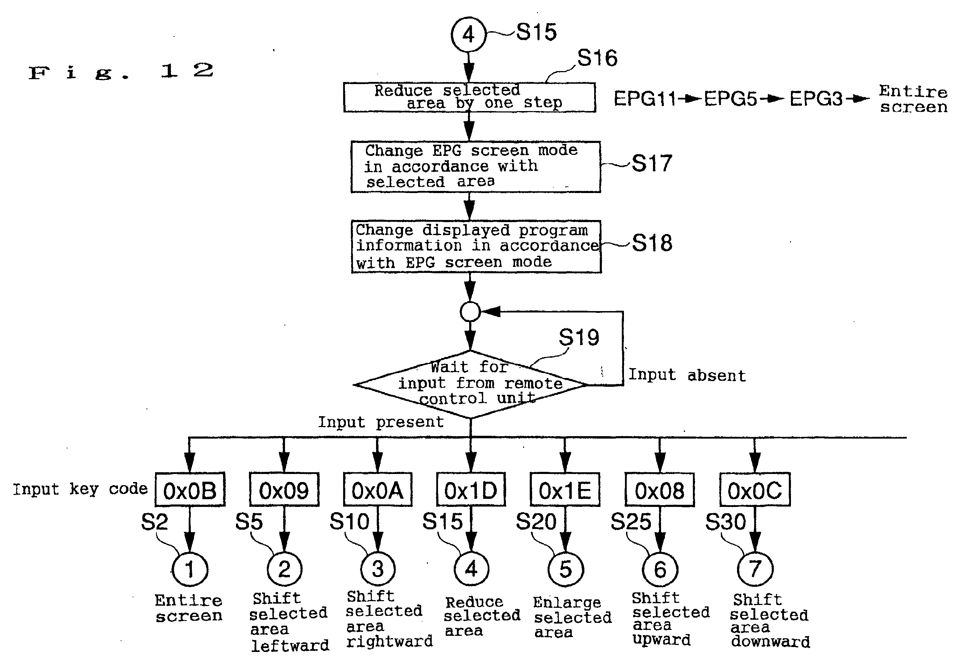

When "reduce selected area" (S15) is selected at "wait for input from remote control unit" (S4), that is, when the button of zoom in 57 is depressed at the remote control unit, the selected area is reduced. That is, the selected area is reduced by one step in the flowchart of FIG. 12. Then, the EPG screen mode is changed in accordance with the selected area (S17). Then, the displayed program information is changed in accordance with the EPG screen mode (S18). When the screen displaying eleven channels (FIG. 18) is the pre-processing screen, the post-processing screen provided by performing this processing is the screen displaying five channels (FIG. 17). When the screen displaying five channels (FIG. 17) is the pre-processing screen, the post-processing screen provided by performing this processing is the screen displaying three channels (FIG. 16). When the screen displaying three channels (FIG. 16) is the pre-processing screen, the post-processing screen is the condition where the picture of the currently selected channel is displayed on the entire screen. When display is provided on the display monitor 5, by gradually changing the display size from the pre-processing channel and time frame to the post-processing channel and time frame, the change of the display screen can be made easy to recognize. When the selected area is reduced, it is reduced with respect to the EPG information situated in the center of the screen. Then, the process shifts to "wait for input from remote control unit" (S19), and when an input is made at the remote control, the process shifts to the flowcharts of FIGs. 10 to 15. However, when a future program that has not been broadcast yet or a past program that has already been broadcast is currently selected, since it is impossible to display the picture of the currently selected program on the entire screen, the display screen is not shifted to this screen.

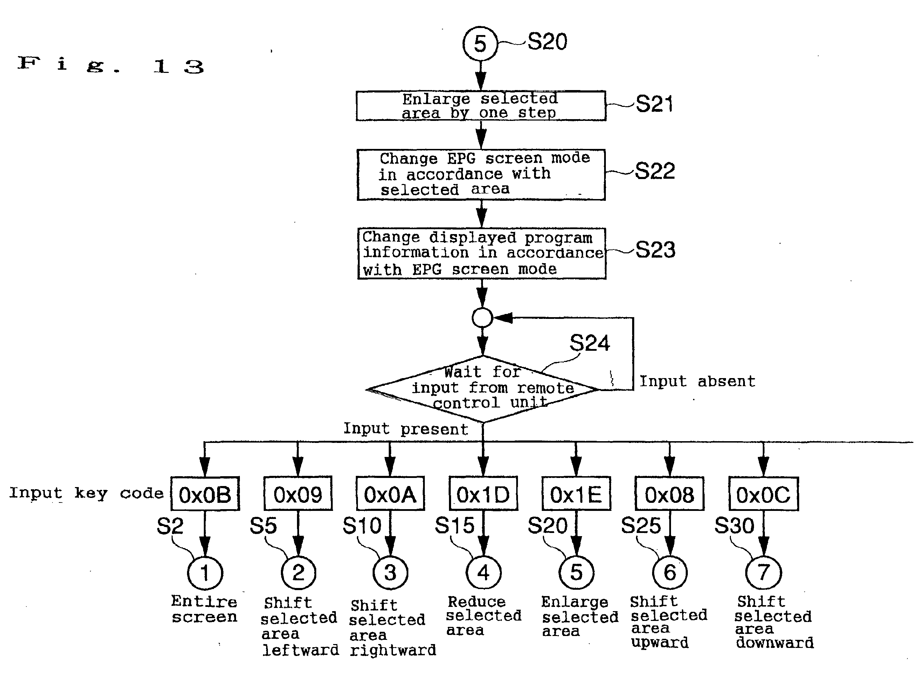

When "enlarge selected area" (S20) is selected at "wait for input from remote control unit" (S4), that is, when the button of zoom out 58 is depressed at the remote control unit, the selected area is enlarged. That is, the selected area is enlarged by one step in the flowchart of FIG. 13. Then, the EPG screen mode is changed in accordance with the selected area (S22). Then, the displayed program information is changed in accordance with the EPG screen mode (S23). When the screen displaying only one channel, that is, the screen displaying the picture of the currently selected program on the entire screen is the pre-processing screen, the post-processing screen provided by performing this processing is the screen displaying three channels (FIG. 16). When the screen displaying three channels (FIG. 16) is the pre-processing screen, the post-processing screen is the screen displaying five channels (FIG. 17). When the screen displaying five channels (FIG. 17) is the pre-processing screen, the post-processing screen is the screen displaying eleven channels. When display is provided on the display monitor 5, by gradually changing the display size from the pre-processing channel and time frame to the post-processing channel and time frame, the change of the display screen can be made easy to recognize. When the selected area is enlarged, it is enlarged with respect to the EPG information situated in the center of the screen. Then, the process shifts to "wait for input from remote control unit" (S24), and when an input is made at the remote control, the process shifts to the flowcharts of FIGs. 10 to 15. However, when a future program that has not been broadcast yet or a past program that has already been broadcast is currently selected, since it is impossible to display the picture of the currently selected program on the entire screen, this screen is not provided, and the screen displaying three channels (FIG. 16) is the most enlarged screen.

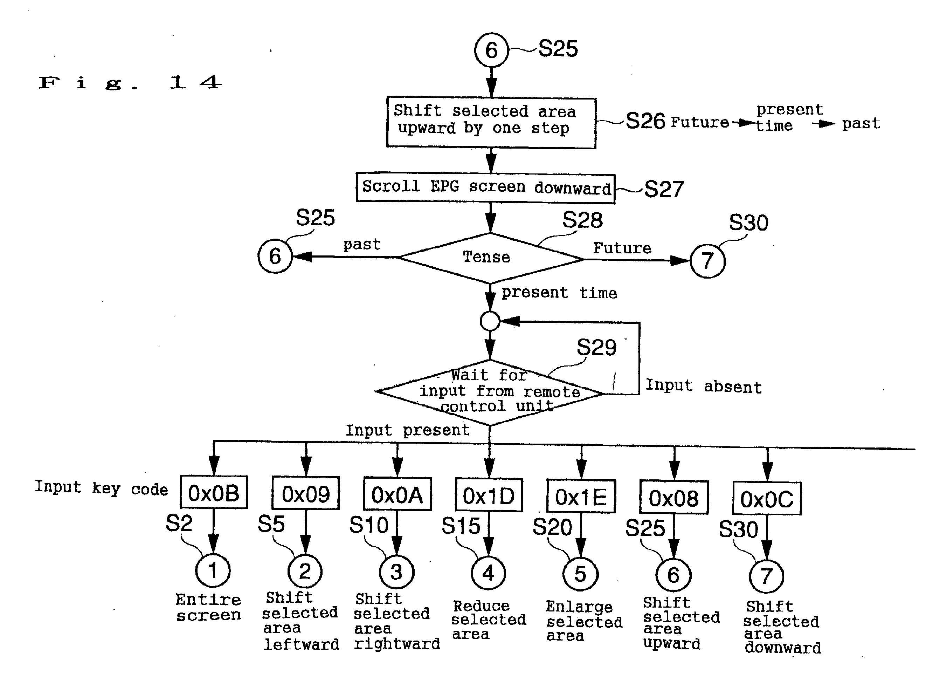

When "shift selected area upward" (S25) is selected at "wait for input from remote control unit" (S24), that is, when the button of to past program 48 is depressed at the remote control unit, the selected area is scrolled upward. That is, the selected area is shifted upward by one step in the flowchart of FIG. 14 (S26). In this case, one step corresponds to one program information cell, and the information of 15 minutes past is displayed. Then, the EPG screen is scrolled downward (S27). Then, the EPG screen is scrolled downward (S27). Then, at "tense" (S28), when the user intends to display EPG information of the past, "shift selected area upward" (S25) is selected. When the user intends to display EPG information of the future, "shift selected area downward" (S30) is selected. When the tense is not changed, the process shifts to "wait for input from remote control unit" (S29). When an input is made at the remote control unit, the process shifts to the processing of the flowcharts of FIGs. 10 to 15.

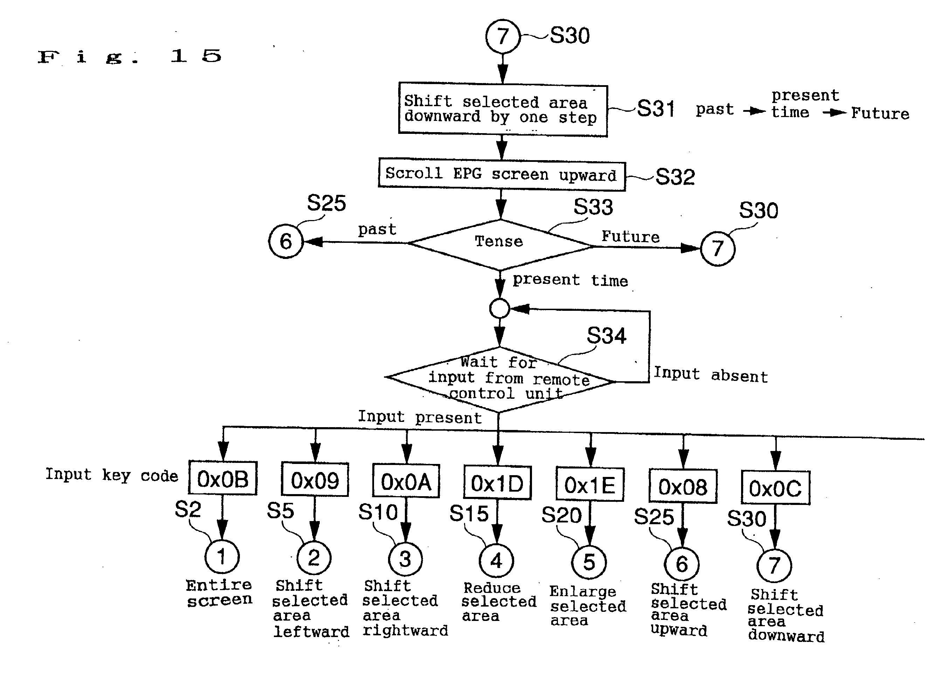

When "shift selected area downward" (S30) is selected at "wait for input from remote control unit" (S4), that is, the button of to future program 51 is depressed at the remote control unit, the selected area is scrolled downward. That is, the selected area is shifted downward by one step in the flowchart of FIG. 15 (S31). In this case, one step corresponds to one program information cell, and the information of 15 minutes ahead is displayed. Then, the EPG screen is scrolled upward (S32). Then, at "tense" (S33), when the user intends to display EPG information of the past, "shift selected area upward" (S25) is selected. When the user intends to display EPG information of the future, "shift selected area downward" (S30) is selected. When the tense is not changed, the process shifts to "wait for input from remote control unit" (S34). When an input is made at the remote control unit, the process shifts to the processing of the flowcharts of FIGs. 10 to 15.

The operation for display processing to change the display on the screen has been described.

By operating the display screen as described above, a wide area of EPG information can easily be viewed, EPG information can be viewed in detail, and an assistance can be obtained in program selection. The zoom command of the present invention is not limited to the one to perform a zoom processing of four steps of the entire screen, the display of three channels, the display of five channels and the display of eleven channels like the reduction of the selected area and the enlargement of the selected area in this embodiment. It may be any command to perform a zoom processing of steps of an arbitrary number that is two or more, for example, three steps or five steps.

Further, the zoom command of the present invention is not limited to the one to discretely change the magnification like in this embodiment, but may be one to continuously change the zoom magnification.

Further, the zoom command of the present invention is not limited to the one to perform enlargement or reduction with respect to the center of the display screen in the above-described embodiment, but may be any one that executes a zoom command with respect to an arbitrary position inside or outside the screen such as the upper right end of the screen or the lower left end of the screen.

Further, the interval of the program information cells of this embodiment is not limited to 15 minutes like in the above-described embodiment, but may be one with which the zoom processing such as enlargement or reduction is facilitated in displaying EPG information.

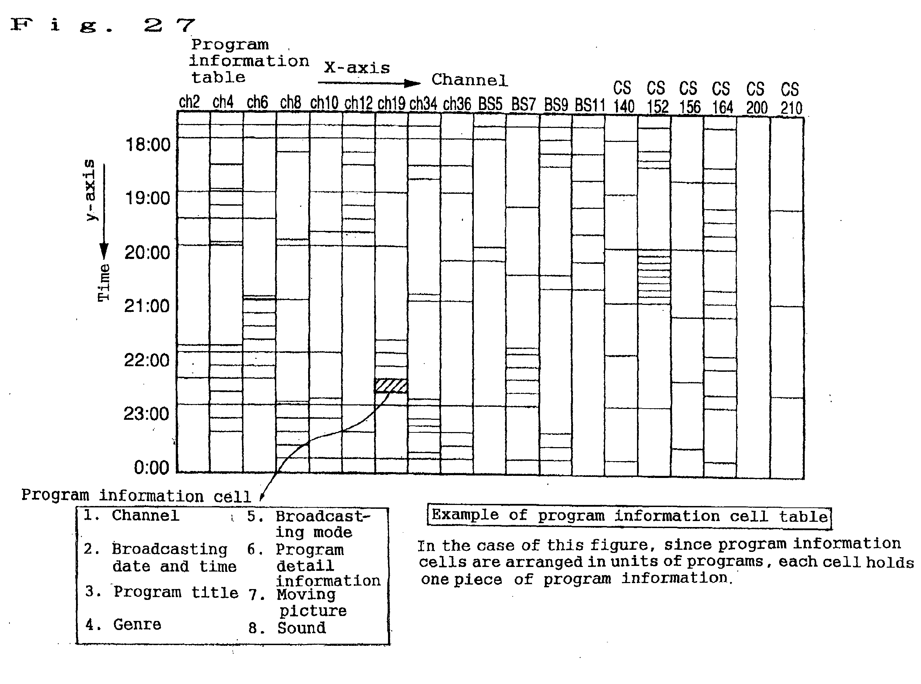

Further, the EPG data storage means of this embodiment is not limited to the one storing program information so as to be divided in cells based on the channel and a predetermined time like in the above-described embodiment, but may be one storing program information so that the EPG information is not divided in cells of a predetermined time but is divided in units of time frames when the program is broadcast and channels. As an example in which program information is divided in cells based on the channel and the time frame when the program is broadcast, a program information table as shown in FIG. 27 can be used. By using such a table, similar effects as those obtained when the program information table of FIG. 3 can also be obtained.

Further, while FIGs. 1 and 2 show a configuration example in which EPG data is transmitted from the broadcasting station 1, the provider of EPG data is not limited to the broadcasting station 1, but EPG data may be provided through the internet or by use of a recording medium such as a CD. In this case, similar effects can be obtained by the tuner 2 using a reception processing block corresponding to the medium.

### (Embodiment 2)

Next, a second embodiment will be described with reference to the drawings. In this embodiment, a case in which EPG information is searched will be described. The configuration of this embodiment will not be described because it is the same as that of the first embodiment.

FIG. 5 is a view showing the flow of an operation performed when a currently broadcast program is selected.

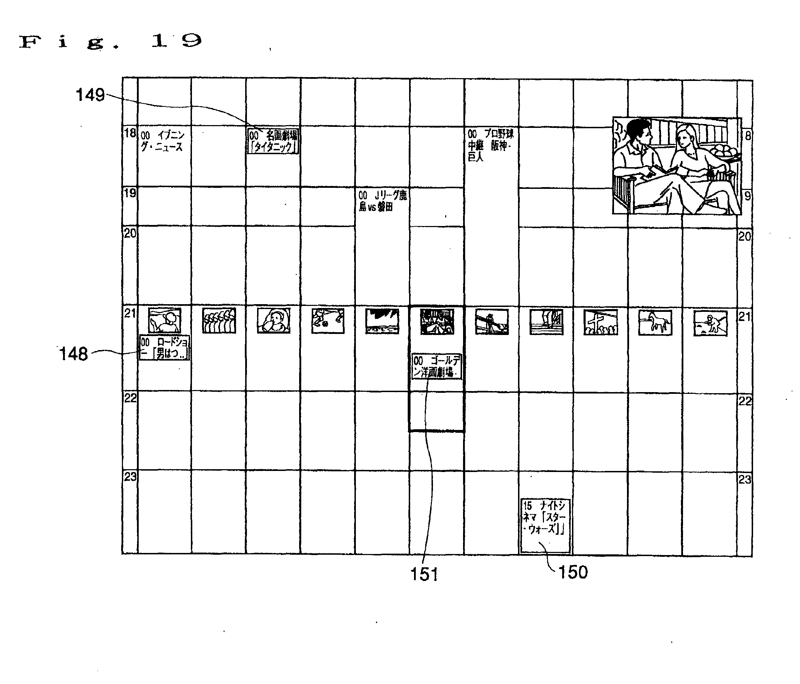

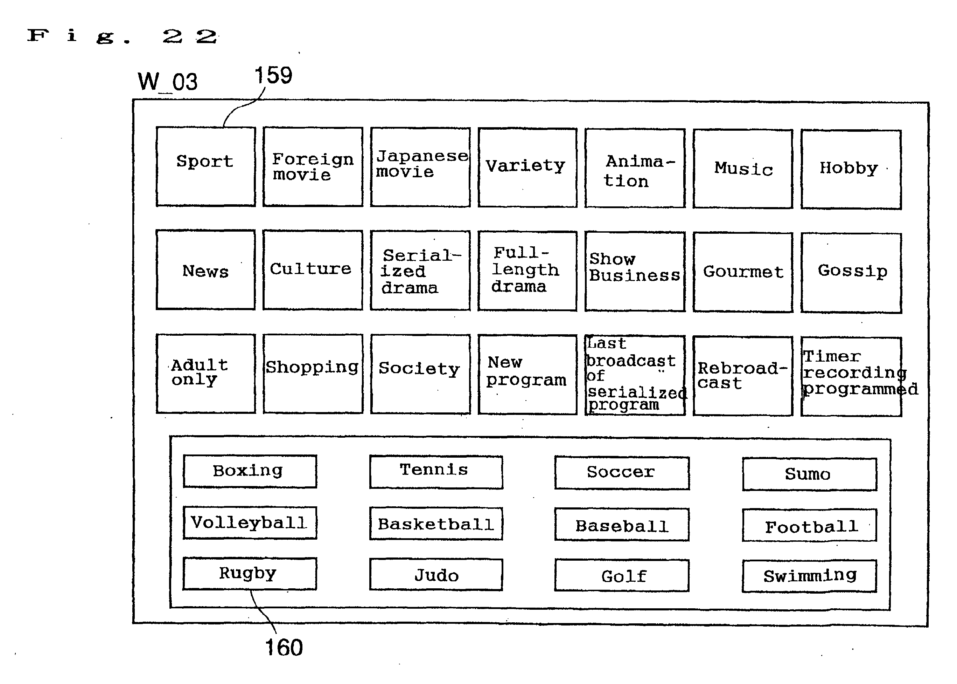

An entire screen 61 is a display screen where the currently selected program is displayed on the entire screen. An EPG 3 (62) is a display screen where EPG information of three channels is displayed so that the currently selected program is situated in the center, and corresponds to FIG. 16 described in the first embodiment. An EPG 5(63) is a display screen where EPG information of five channels is displayed so that the currently selected program is situated in the center, and corresponds to FIG. 17 described in the first embodiment. An EPG 11(64) is a display screen where EPG information of eleven channels is displayed so that the currently selected program is situated in the center, and corresponds to FIG. 18 described in the first embodiment. The operation to shift among the entire screen 61, the EPG 3(62), the EPG 5(63) and the EPG 11(64) is the same as that described in the first embodiment. A genre search 66 is a display screen for performing a search with respect to the genre. FIG. 22 shows an example thereof. A link search 67 is a display screen for extracting a key word from the contents of the displayed EPG information and searching the EPG information based on the key word. FIG. 16 shows an example thereof. A time axis present 68 is a display screen where the result of the search is displayed together with the time axis. FIG. 19 shows an example thereof.

A time axis absent 69 is a display screen where the result of the search is displayed without the time axis by deleting the programs that do not apply to the result of the search.

When the result of the search is displayed in accordance with the time axis like in FIG. 19, it is possible to display a relationship between the time and channels such as whether programs applying to the result of the search are present on a multiplicity of channels in the same time frame. In a case where the result is displayed without the time axis, when many applying programs are found on the same channel from the past to the future, the result can be shown without being restricted by the time axis, so that more applying programs can be displayed. An EPG 5(70) is a display screen where the cursor is moved among programs fulfilling the search criterion and the EPG information of five channels is displayed with respect to the selected programs, and corresponds to FIG. 17. An EPG 3(71) is a display screen where the EPG information display screen of the EPG 5(70) is enlarged so that the EPG information of three channels is displayed, and corresponds to FIG. 16. A genre search 72 is a display screen for performing a search with respect to the genre like the genre search 66. FIG. 22 shows an example thereof. A link search 73 is a display screen for performing a search with respect to the genre like the link search 67. FIG. 22 shows an example thereof.

Next, an operation to search EPG information by use of the remote control unit in such a screen configuration will be described.

First, the operation of a search by genre and an example of the display screen thereof will be described. Assume that the button of search 53 is depressed by use of the remote control unit when any one of the EPG 3(62), the EPG 5(63) and the EPG 11(64) is shown on the display monitor 5. Then, the display screen is changed to the genre search 66. FIG. 22 shows an example of the display screen of the genre search 66. The genre can be selected from the top menu. Assume that sport 159 is selected from the top menu. The selection from the menu can be made with the button of enter 52 as described above. The cursor can be moved by the following four buttons: The cursor is moved leftward by the button of Ch. switching 49, the cursor is moved rightward by the button of Ch. switching 50, the cursor is moved upward by the button of to past program 48, and the cursor is moved downward by the button of to future program 51. In the following description, it is assumed that when selection from the menu is made, the cursor is moved and selection is made by use of the above-described buttons. Since sport is selected, a submenu 160 appears in a lower part of the screen. When a genre of the submenu is selected, a search of EPG information is actually performed. The methods of displaying the result of the search include the display method of time axis present 68 where the vertical axis of the screen represents the time axis, the horizontal axis represents channels and the titles of the programs are shown, and the display method of time axis absent 69 where the time axis along the vertical axis of the screen is absent, the horizontal axis represents channels and only the titles of the programs fulfilling the search criterion are shown so as to be close to one another. To change the display method, the toggle 43 of the remote control unit 24 is depressed, so that the microcomputer 7 having received a control code from the remote control unit 24 transmits information to the EPG screen generating means 4 to change the display method.

Further, by moving the cursor on the screen of time axis present 68 or time axis absent 69 by use of the remote control unit, a program fulfilling the search criterion can be selected. When a specific program is selected and the button of zoom out 58 is depressed at the remote control unit, the display screen is changed to the EPG 5 (70) with the selected program being displayed in the center. When the button of zoom out 58 is further depressed at the remote control unit, the display screen is changed to the EPG 3(71). By depressing the button of search 53 at the remote control unit here, a search can be performed again. When the button of zoom in 57 is depressed twice in a condition where the EPG 3(71) is shown, the screen can be returned by way of the EPG 5(70) to the screen of time axis present 68 or time axis absent 69 showing the result of the search. When the button of return 46 is depressed at the remote control unit in a condition where the screen of time axis present 68 or time axis absent 69 is shown, the display screen is changed to the genre search 66, and when the button of return 46 is further depressed, any one of the EPG 3(62), the EPG 5(63) and the EPG 11(64) is shown on the display monitor 5.

Next, an operation of the link search and an example of the display screen thereof will be described. Assume that any one of the EPG 3(62), the EPG 5(63) and the EPG 11(64) is shown on the display monitor 5 like in the case where the genre search is performed. Assume that the button of link 54 is depressed by use of the remote control unit at this time. Then, the processing shifts to the link search 67. Although the display screen is not changed in this case, the functions of the buttons of the remote control unit change. That is, the buttons of Ch. switching 49, Ch. switching 50, to past program 48 and to future program 51 function as buttons for moving the cursor. The button of enter 52 functions as a button for selecting a keyword. Assume now that the display screen of the EPG 3 (62) is shown. An example thereof is the one shown in FIG. 16. At this time, the cursor can be moved in units of key words displayed on the screen. For example, it is assumed that the cursor is placed on a key word "Michael Douglas". When "Michael Douglas" is selected by depressing the button of enter 52 at the remote control unit at this time, programs linked with "Michael Douglas" are searched for. That is, the program information extracting means 15 searches the EPG information database for the key word "Michael Douglas" to detect applying programs. Thereby, a search is performed by highlighting the titles of the programs on the screen of the EPG 3 or the EPG 5. For example, movies in which "Michael Douglas" takes part are searched for. Or, foreign movies are searched because "Michael Douglas" is not Japanese. The result of the search is shown by the method of time axis present 68 or time axis absent 69 like in the case of the search by genre, and switching between the display screens thereof can be made by the button of toggle 43 on the remote control unit. Moreover, processing such that a re-search can be performed by changing the screen to the EPG 5(70) or the EPG 3(71) can be performed similarly to the case of the search by genre. Moreover, when the button of return 46 is depressed at the remote control unit in a condition where the screen of time axis present 68 or time axis absent 69 is shown, the screen of the link search 67 is shown, and when the button of return 46 is further depressed, any one of the EPG 3(62), the EPG 5 (63) and the EPG 11(64) is shown on the display monitor 5.

FIG. 19 shows a display screen showing a result of the link search. Assume that the cursor is moved to select a key word Goruden Yoga Gekijo (Golden Foreign Movie Theater) 151. Then, movies are searched because the genre of Goruden Yoga Gekijo is movie. Thus, EPG information of movies is highlighted in a different color or brightness. For example, in FIG. 19, Meiga Gekijo (Film Classic) 149, Rodo Sho (Road Show) 148 and Naito Shinema (Night Cinema) 150 are highlighted. When the cursor is moved with the remote control unit in FIG. 19, the cursor skips among the parts of the highlighted programs, so that programs fulfilling the criterion of the link search can be selected.

Between the search by genre and the link search, the following operations are all the same: the operation performed when the currently broadcast program is selected; the operation performed when a future program that has not been broadcast yet is selected; the operation performed when a past program that has already been broadcast is selected; and the operation performed when one program is displayed on the display monitor. Therefore, it is unnecessary to distinguish the operation according to the tense and the condition of the monitor.

By performing such a search, the user can select the program he or she wants to watch while easily and effectively using EPG information.

### (Embodiment 3)

Next, a third embodiment will be described with reference to the drawings. In this embodiment, a case will be described in which recording, programming of timer recording, reproduction, watching and programming of timer watching are performed by use of an external recording/reproducing device. The configuration of this embodiment will not be described because it is the same as that of the first embodiment.

The program and the EPG information transmitted from the broadcasting station 1 in FIG. 1 are input to the input switching means 3 through the tuner 2. Programs stored in an external recording/reproducing device such as the VTR 10, the DVD 11 or the HDD 12 are operated with the remote control unit based on the display screen generated by the EPG screen generating means 4. For the result, the EPG data and the external device are associated by external device/EPG data associating means 7. Receiving the result, the external recording device control signal generating means 21 generates signals to control the external recording/reproducing device (hereinafter, referred to as control commands). The control commands are actually exchanged between the IEEE1394 digital interface 9 and the external recording/reproducing device. The control commands generated by the external device control signal generating means 21 are transmitted to the external recording/reproducing device in compliance with the protocol defined by the IEEE1394-1995. As the control commands, commands to perform mechanical operations of the device such as reproduction, stopping, fast forwarding, rewinding and recording, a command to inquire about the current condition of the device and the internal information and a command to change the information are transmitted, and responses to the commands are returned from the external recording/reproducing device. By performing such exchange of commands, operations such as recording and reproduction are controlled, so that AV data can be transmitted and received on the IEEE1394 serial bus. The reproduction video data transmitted from the external recording/reproducing device is input to the input switching means 3, and the EPG screen and the program are displayed on the display monitor 5 by use of the program and the EPG information received through the tuner 2.

Next, a method of operating the EPG information displayed in the above-described manner will be described.

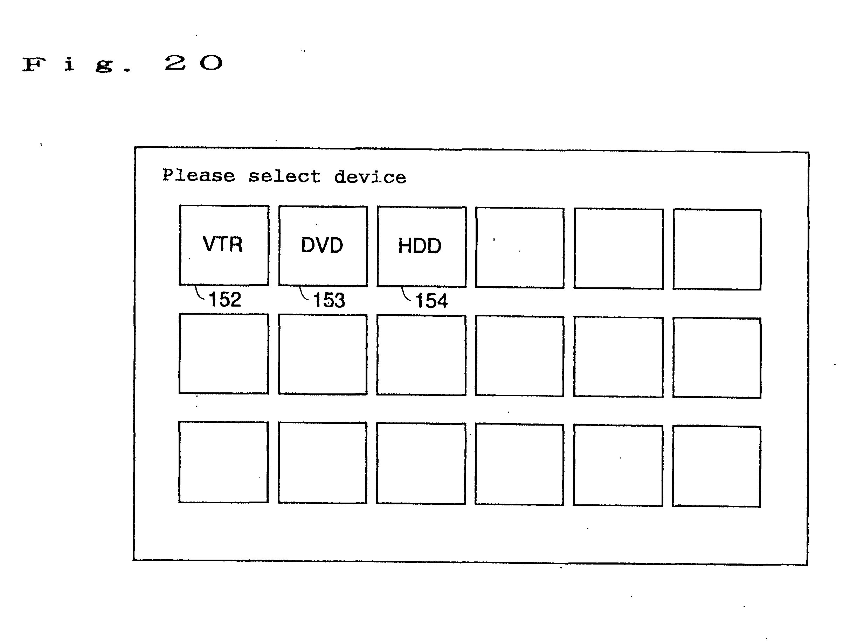

The operation performed when the currently broadcast program is selected will be described with reference to FIG. 5. The entire screen 61, the EPG 3(62), the EPG 5(63) and the EPG 11(64) have been described in the first embodiment. A device selection 65 is a display screen for performing an operation to select an external recording/reproducing device. FIG. 20 shows an example thereof.

When the button of device 41 is depressed at the remote control unit, the device selection 65 is shown on the display monitor 5. As the devices, the devices connected through the IEEE1394 serial bus are displayed as shown in FIG. 1. Therefore, for the currently selected program, an external device such as a VTR 152, a DVD 153 or an HDD 154 suitable for recording can be selected according to the compression method or the configuration of the broadcast wave in accordance with the output signal from the tuner 2.

When receiving a broadcast wave analog signal, the tuner 2 converts it into a digital signal by an appropriate compression encoder, and outputs the digital signal. In this embodiment, for analog broadcasts such as VHF/UHF and BS, a compression method based on the standard of consumer digital VTRs is used, and for digital CS broadcasts, a compression method of MPEG 2 is used.

As described above, the cursor can freely be moved by depressing the buttons of Ch. switching 49, Ch. switching 50, to past program 48 and to future program 51. Selection can be made by depressing the button of enter 52. Assume that the cursor is moved with the remote control unit to select the HDD 154. By depressing the button of enter 52, recording of the currently selected program onto the HDD 154 is started.

This operation will be described in further detail. The microcomputer 6 receives the EPG information of the currently selected program and the type of the selected external recording device from the EPG screen generating means 4.

The microcomputer 7 updates the program information recorded on the specified external recording device HDD 12 by the EPG data managing means 8, and updates an EPG data management database by adding and updating various pieces of information for recording a new program such as deciding the program recording start point of the HDD 12 and adding the EPG information received from the EPG screen generating means 4 to a new recording list. In doing this, when there is information to be confirmed such as a case where a predetermined recording time cannot be secured and a case where recording is restricted like pay-per-view programs, the EPG screen generating means 6 is notified of the information to urge the user to confirm the information.

Further, based on the EPG data management database updated by the EPG data managing means 8, the microcomputer 7 prepares a series of command procedures for controlling the HDD 12 by the external recording device control signal generating means 21.

Lastly, the microcomputer 7 controls the HDD 12 through the IEEE1394 digital interface 9 by the external recording device connection managing means 22 in accordance with the command procedures, and records the target program onto the HDD 12 while converting the output of the input switching means 3 into a predetermined protocol. After the program ends, the recording is automatically stopped.

When the button of return 46 on the remote control unit is depressed, the screen is returned to the EPG display screen such as the EPG 5(63) without performing the recording processing.

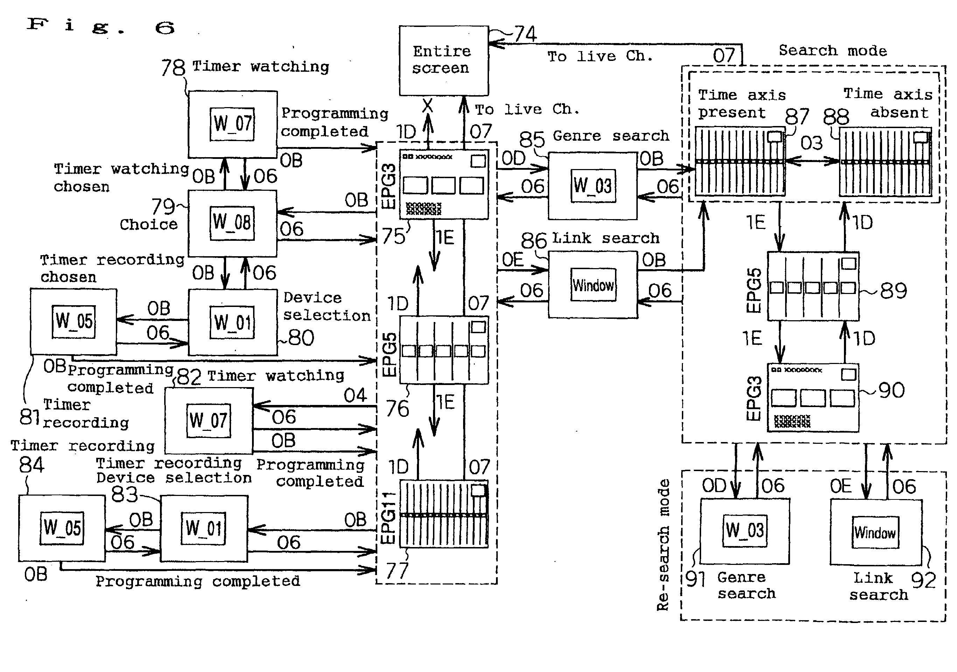

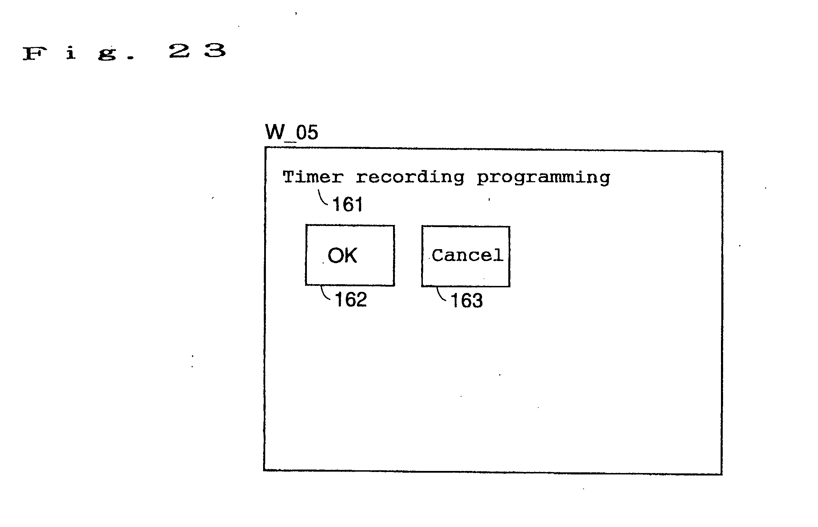

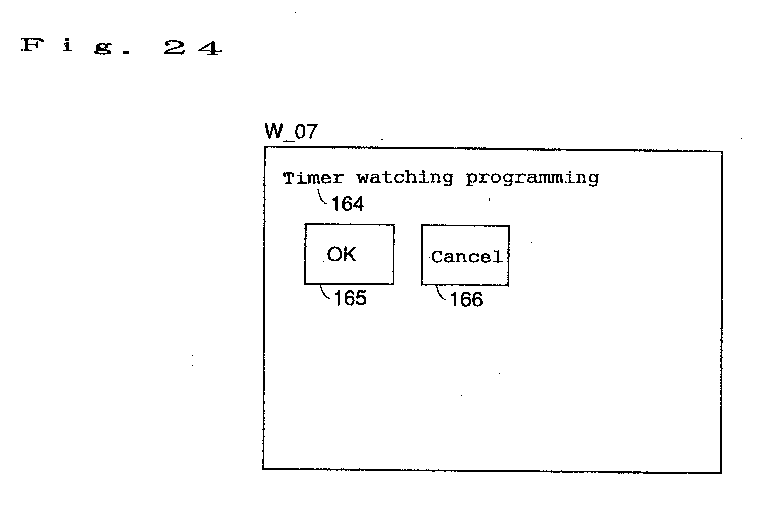

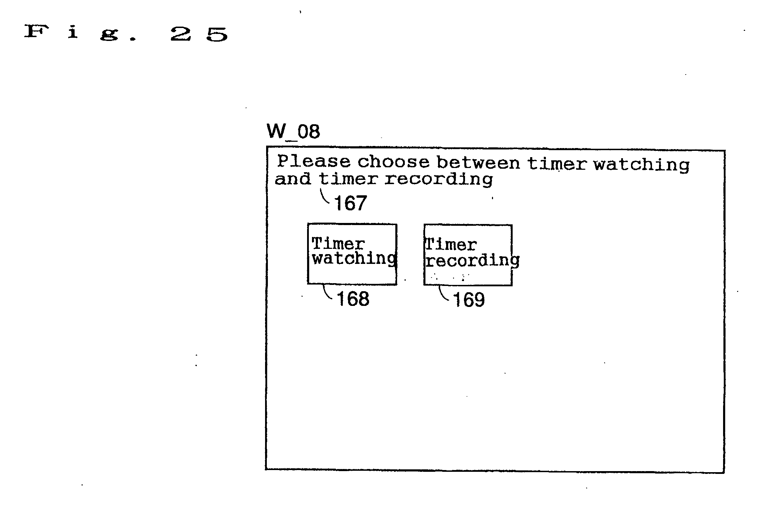

Next, the operation performed when a future program that has not been broadcast yet is selected will be described with reference to FIG. 6. An entire screen 74, an EPG 3(75), an EPG 5(76) and an EPG 11(77) have been described in the first embodiment. That is, the entire screen 74 is a display screen where the program being broadcast on the channel of the currently selected program is shown. The EPG 3(75), the EPG 5(76) and the EPG 11(77) correspond to FIGs. 16, 17 and 18, respectively. Timer watching 78 is a display screen for programming timer watching. FIG. 24 shows an example thereof. Choice 79 is a display screen for choosing between timer watching and timer recording. FIG. 25 shows an example thereof. Device selection 80 is a display screen for selecting an external recording/reproducing device. FIG. 20 shows an example thereof. Timer recording 81 is a display screen for programming timer recording. FIG. 23 shows an example thereof. Timer watching 82 is a display screen for programming timer watching. FIG. 24 shows an example thereof. Device selection 83 is a display screen for selecting an external recording/reproducing device. FIG. 20 shows an example thereof. Timer recording 84 is a display screen for programming timer recording. FIG. 23 shows an example thereof.

Assume that any one of the EPG 3(75), the EPG 5(76) and the EPG 11(77) is shown on the display monitor 5. Assume now that the display screen of the EPG 5(76) is shown. When the button of enter 52 is depressed at the remote control unit, the display screen is changed to the choice 79. That is, as shown in FIG. 25, a screen for selecting either timer watching 168 or timer recording 169 appears together with a message 167 "Please choose between timer watching and timer recording". One of them is chosen with the remote control unit. Assume that timer watching 168 is selected. Then, the display screen is changed to the timer watching 78. That is, the display screen is changed to one as shown in FIG. 24. On this screen, by choosing OK 165 at the remote control unit and depressing the button of enter 52 in succession, programming of timer watching is completed. Then, the display screen is returned to the EPG 5(76). By choosing cancel 166 and depressing the button of return 46 in succession, the display screen is returned to the screen of the choice 79 without programming timer watching. When the timer recording 169 is selected in FIG. 25, the display screen is changed to the device selection 80. That is, the display screen is changed to one as shown in FIG. 20, so that an external device such as the VTR 152, the DVD 153 or the HDD 154 can be selected for the selected future program. Assume that the HDD 154 is selected by moving the cursor with the remote control unit and that the button of enter 52 is depressed in succession. Then, for the selected future program, the HDD 154 is selected as the device for recording, and the display screen is changed to the timer recording 81. That is, the display screen is changed to one as shown in FIG. 23. By choosing OK 162 and depressing the button of enter 52 in succession, timer recording of the selected future program onto the HDD 154 is programmed. Then, the display screen is returned to the EPG 5(76). By choosing cancel 163 and depressing the button of return 46 in succession, the display screen is returned to the device selection 80 without programming timer recording. By further depressing the button of return 46, the display screen is returned to the choice 79.

The above-described operations will again be detailed with reference to FIG. 1.

The microcomputer 6 receives the EPG information of the currently selected program and the type of the selected external recording device from the EPG screen generating means 4.

In the case of programming of timer watching, the microcomputer 7 updates the EPG data management database by adding the EPG information received from the EPG screen generating means 4 to a new timer watching list by the EPG data managing means 8. When the specified time comes, the tuner 2 is actuated and caused to output the specified channel, and the output specified channel is output to the display monitor 5. Then, the operation of the tuner 2 and the like is stopped at the program end time.

In the case of programming of timer recording, the microcomputer 6 receives the EPG information of the currently selected program and the type of the selected external recording device from the EPG screen generating means 4.

The microcomputer 7 updates the program information recorded on the specified external recording device HDD 12 by the EPG data managing means 8, and updates the EPG data management database by adding and updating various pieces of information for recording a new program such as deciding the program recording start point of the HDD 12 and adding the EPG information received from the EPG screen generating means 4 to a new recording list. In doing this, when there is information to be confirmed such as a case where a predetermined recording time cannot be secured and a case where recording is restricted like pay-per-view programs, the EPG screen generating means 6 is notified of the information to urge the user to confirm the information. Then, the operation on the timer recording programming screen is completed.

Further, based on the EPG data management database updated by the EPG data managing means 8, the microcomputer 7 prepares a series of command procedures for controlling the HDD 12 by the external recording device control signal generating means 21.

When the recording start time comes, the microcomputer 7 instructs the tuner 2 to output the specified channel, and for the HDD 12, starts a processing to perform recording in accordance with the above-mentioned command procedures.

Lastly, the microcomputer 7 controls the HDD 12 through the IEEE1394 digital interface 9 by the external recording device connection managing means 22 in accordance with the command procedures, and records the target program onto the HDD 12 while converting the output of the input switching means 3 into a predetermined protocol. After the program ends, the recording is automatically stopped.

When the button of watching 44 is depressed at the remote control unit, the display screen is changed from the EPG 5(76) to the watching programming 82, and display is provided as shown in FIG. 24. By choosing OK 165 and depressing the button of enter 52 in succession on this screen, timer watching is programmed. By choosing cancel 166 and depressing the button of return 46 in succession, timer watching is not programmed. Thus, the display screen is again returned to the EPG 5(76).

When the button of recording 45 is depressed at the remote control unit, the display screen is changed from the EPG 5(76) to the device selection 83, and the display screen is changed to one as shown in FIG. 20. By selecting a device such as the HDD 154 with the remote control unit and depressing the button of enter 52 in succession, the display screen is further changed to the timer recording 84, that is, to that shown in FIG. 23, and choosing OK 162 or cancel 163 is specifying whether timer recording is programmed or not.

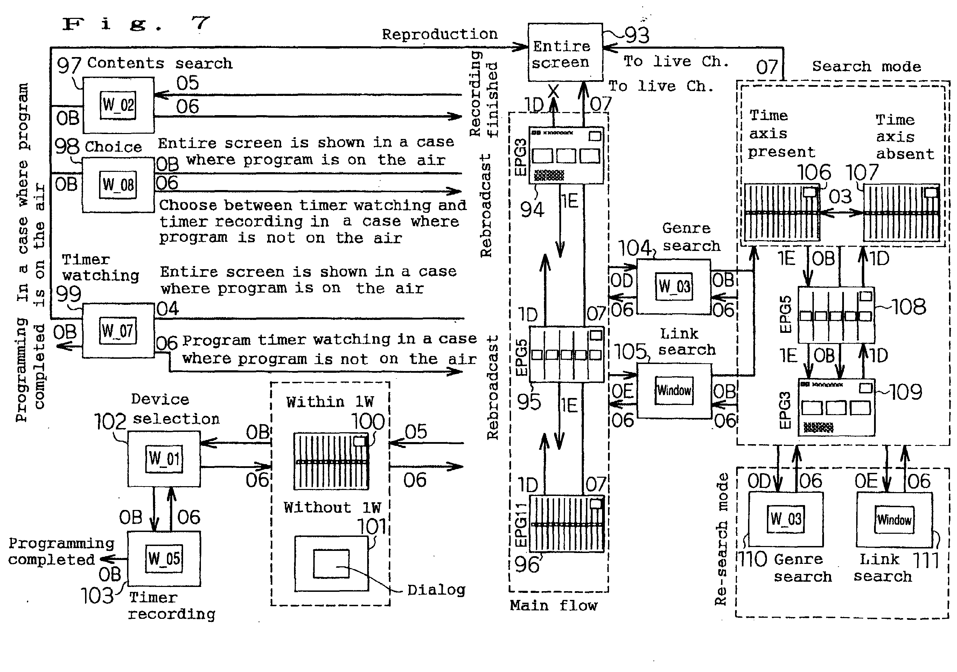

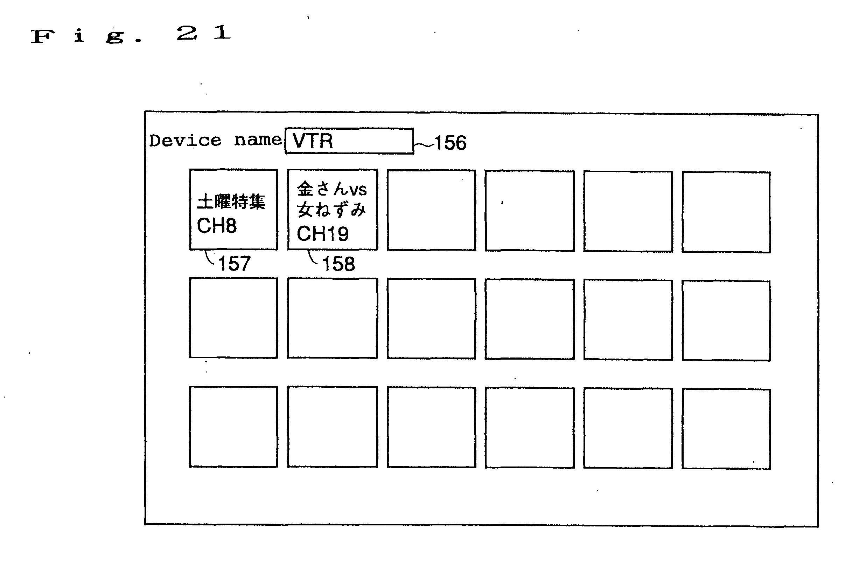

Next, the operation performed when a past program that has already been broadcast is selected will be described with reference to FIG. 7. An entire screen 93, an EPG 3(94), an EPG 5(95) and an EPG 11(96) have been described in the first embodiment. That is, the entire screen 93 is a display screen where the program being broadcast at the current time on the channel of the currently selected program is displayed. The EPG 3(94), the EPG 5(95) and the EPG 11(96) correspond to FIGs. 16, 17 and 18, respectively. A contents search 97 is a display screen for selecting contents from recordings of programs having been broadcast and recordings of contents that are not broadcasts such as sports meetings. FIG. 21 shows an example thereof. Choice 98 is a display screen for choosing between timer watching and timer recording. FIG. 25 shows an example thereof. Timer watching 99 is a display screen for programming timer watching. FIG. 24 shows an example thereof. Device selection 102 is a display screen for selecting an external recording/reproducing device. FIG. 20 shows an example thereof. Timer recording 103 is a display screen for programming timer recording. FIG. 23 shows an example thereof. Within 1W 100 is a display screen provided in a case where when a past program is selected and recorded, a rebroadcast of the program is present within the display screen. In this display screen, the part of the rebroadcast is highlighted on the display screen of the EPG 11(96). Without 1W 101 is a display screen provided in a case where when a past program is selected and recorded, the part of the rebroadcast of the program is absent within the display screen. In this display screen, a dialog showing the nearest time frame of the rebroadcast and the channel is displayed.

Assumed that any one of the display screens of the EPG 3(94), the EPG 5(95) and the EPG 11(96) is shown on the display monitor 5. Here, assume that the display screen of the EPG 5(95) is shown and that a past program is selected. When the button of recording 45 is depressed at the remote control unit at this time, the display screen is changed to the contents search 97. That is, the display screen is changed to one as shown in FIG. 21. By moving the cursor with the remote control unit or by selecting the section of the VTR 156, the contents of another device can be displayed. Assume now that Doyo Tokushu (Saturday Special) 157 which is a content of the VTR 156 is selected. When the button of enter 52 is depressed at the remote control unit at this time, the display screen is changed to the entire screen 93 and Doyo Tokushu 157 is reproduced.

The above-described operation will again be detailed with reference to FIG. 1. In this case, the microcomputer 6 receives the EPG information of the currently selected program and the type of the selected external recording device from the EPG screen generating means 4.

The microcomputer 7 extracts the program information recorded on the specified external recording device VTR 10 by the EPG data managing means 8, extracts the recording list from the EPG data management database, and confirms information such as the reproduction start position and the recording time of Doyo Tokushu 157 recorded on the VTR 10.

Then, immediately, based on the EPG data management database from the EPG data managing means 8, the microcomputer 7 prepares a series of command procedures for controlling the VTR 10 by the external recording device control signal generating means 21.

Lastly, the microcomputer 7 causes the external recording device connection managing means 22 to start reproduction of the VTR 10, inputs the output thereof to the input switching means 3 through the IEEE1394 digital interface 9, and mainly outputs it to the display monitor 5 through the EPG screen generating means 4.

Then, after the program Doyo Tokushu 157 is ended, the reproduction is automatically stopped, and the display screen is returned to a predetermined EPG screen.

At the contents search 97, since not the program title but a representative still picture representing the contents is displayed for pictures which are not broadcasting programs, the contents can be confirmed. When return 46 is selected with the remote control unit on the contents search 97, the display screen is returned to the EPG 5(95).

Assume that the button of enter 52 is depressed at the remote control unit. At this time, the display screen is changed to the choice 98. That is, FIG. 25 is displayed. Here, a rebroadcast of the selected past program is searched for, and for the rebroadcast, timer watching or timer recording is programmed. After timer watching or timer recording is programmed, when the program is on the air, by depressing the button of enter 52, the entire screen 93 is shown when the selected rebroadcast is on the air. When the rebroadcast is not on the air, by depressing the button of return 46 at the remote control unit, the display screen is returned to the EPG 5(93) after timer watching or timer recording is programmed.

Assume that the button of watching 44 is depressed at the remote control unit. At this time, the display screen is changed to the timer watching 99. That is, FIG. 24 is displayed. By choosing cancel 166 and depressing the button of return 46 in succession in FIG. 24, programming of timer watching is canceled, and the display screen is returned to the EPG 5(95). By choosing OK 165, a rebroadcast of the selected past program to be aired in the nearest future is searched for, and timer watching of this program is programmed. When the program is currently on the air, by depressing the button of enter 52 on the remote control unit, this program is shown on the entire screen 93. When the program has not been broadcast yet, by depressing the button of enter 52, the display screen is returned to the EPG 5(95) after timer watching is programmed. By depressing the button of return 46, the display screen is returned to the EPG 5(95) without programming timer watching.

Assume that the button of recording 45 is depressed at the remote control unit. Then, the display screen is changed to either the within 1W 100 or the without 1W 101. By depressing the button of enter 52 under this state, the display screen is changed to the device selection 102. That is, FIG. 20 is displayed. By selecting a device and depressing the button of enter 52 here, the display screen is changed to the timer recording 103. OK 162 or cancel 163 is depressed according to whether timer recording is programmed or not. In a case where OK 162 is chosen, when the rebroadcast is on the air, by depressing the button of enter 52 on the remote control unit, the display screen is changed to the entire screen 93, and the program of which timer recording is programmed is displayed on the screen. When the rebroadcast is not on the air, by depressing the button of enter 52, the display screen is returned to the EPG 5(95). By depressing the button of return 46, the display screen is returned to the EPG 5(95) without programming timer recording.

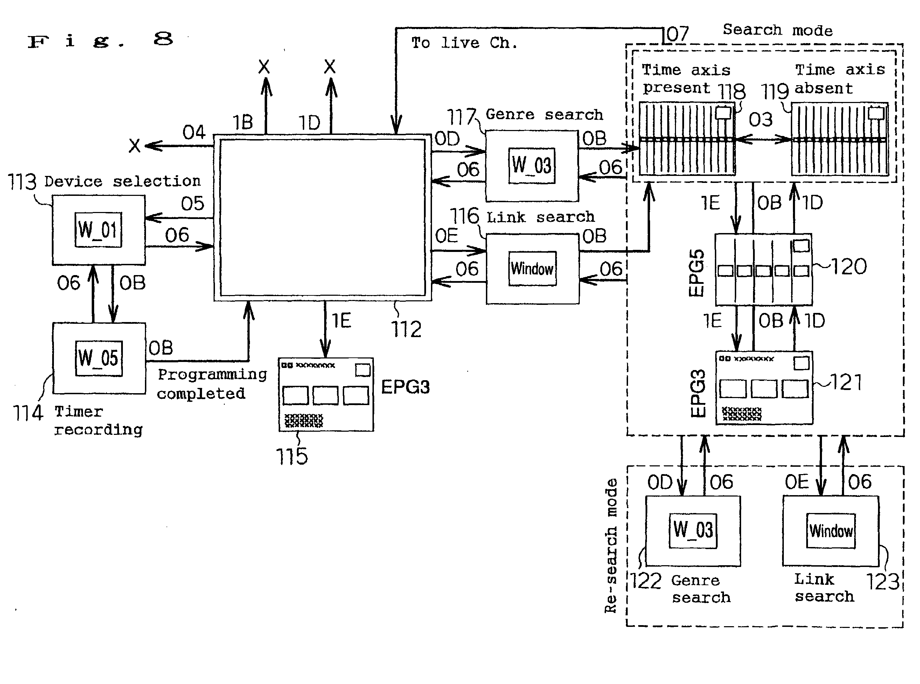

Next, the operation performed when the entire screen is shown will be described with reference to FIG. 8. An entire screen 112 and an EPG 3(115) have been described in the first embodiment. That is, the entire screen 112 is a display screen where the program, of the current time, of the currently selected channel is displayed. The EPG 3(115) corresponds to FIG. 16. A device selection 113 is a display screen for selecting an external recording/reproducing device. FIG. 20 shows an example thereof. A timer recording 114 is a display screen for programming timer recording. FIG. 23 shows an example thereof.

Assume that the entire screen 112 is shown and that a currently broadcast television program is displayed. When the button of recording 45 is depressed at the remote control unit at this time, the display screen is changed to the device selection 113. That is, the display screen is changed to the one shown in FIG. 20. By selecting a device such as the HDD 154 and depressing the button of enter 52 here, the display screen is changed to the timer recording 114. That is, FIG. 23 is shown on the screen. OK 162 or cancel 163 is chosen on this screen. By choosing OK 162 and depressing the button of enter 52 on the remote control unit, programming of timer recording is completed, and the display screen is returned to the entire screen 112. By depressing the button of return 46 on the remote control unit when the device selection 113 or the timer recording 114 is shown, the timer recording 114 is returned to the device selection 113, and the device selection 113 is returned to the entire screen 112.

As described above, by using the remote control unit, recording, programming of timer recording, reproduction and the like can be performed with an easy operation.

The EPG data display means., the superimposing means and the video data display means of this embodiment are an example of the zoom means of the present invention. The EPG data display means, the superimposing means and the video data display means of this embodiment also act as the display means of the present invention. The program information extracting means of this embodiment is an example of the EPG information extracting means of the present invention.

The present invention is also a program recording medium characterized in that a program is stored for causing a computer to perform all or some of the functions of an EPG information display method, an EPG information display apparatus or a recorder/reproducer.

### [Industrial Applicability]

As described above, by using the present invention according to claim 1, a wide range of a table of EPG information comprising a combination of channels and time frames can be viewed, and by narrowing the display range by performing zooming as necessary, the program information required by the user can easily and more quickly be provided in detail.

By using the present invention according to claim 7, EPG information can effectively be displayed even when the display area is limited.

By using the present invention according to claims 12 and 15, the viewability of a search result is improved in the EPG display screen, so that necessary information can more precisely be obtained.

By using the present invention according to claim 16, a result of an operation performed in conjunction with a recording device can easily be found on the EPG display screen.

By using the present invention according to claims 19 and 20, with respect to the EPG information displayed on the screen, when it is a future program, timer recording and timer watching can be programmed, and when the EPG information includes a program that has already been recorded, by specifying the EPG information thereof, complicated operations of recording devices such as immediately starting reproduction of the program by automatically controlling the recording device where the program is recorded.

By using the present invention according to claim 23, pictures of a plurality of target channels can visually be confirmed, so that a desired program can more appropriately be selected on the EPG screen.

## Claims

1. An EPG information display method wherein all or some of EPG information of a predetermined channel and time frame is displayed,
in response to a predetermined zoom command, EPG information of channels or time frames larger or smaller in number than channels or time frames displayed immediately before the zoom command is provided is displayed, and
in doing this, an amount of information in accordance with a magnification of the zoom command is selected and displayed.

2. An EPG information displaymethod according to claim 1, wherein said predetermined channel and time frame are decided with reference to a channel being set in display means where EPG information of the predetermined channel and time frame is to be displayed, and the current time.

3. An EPG information display method according to claim 1, wherein when said EPG information is displayed, for the predetermined channel and time frame, a picture is displayed instead of the EPG information.

4. An EPG information display method according to claim 3, wherein said predetermined channel and time frame are a channel being set in display means where the EPG information is to be displayed and a time frame including the current time, and said picture is a television program currently broadcast on the currently set channel.

5. An EPG information display method according to claim 1, wherein said zoom command is provided with a continuous amount of zoom magnification.

6. An EPG information displaymethod according to claim 1, wherein said zoom command is specified based on the number of displayed channels.

7. An EPG information display method according to claim 1, wherein for EPG information of each program displayed on the screen, an amount of EPG information to be displayed is changed according to a display area thereof.

8. An EPG information display method according to claim 1, wherein items of said EPG information displayed in each area in which said EPG information is to be displayed are decided based on a size of said area, the number of pixels when said area is displayed or the number of letters that can be shown in said area.

9. An EPG information display method according to claim 1, wherein priorities are previously assigned to items representing contents of said EPG information, and said items are displayed in the order of priority.

10. An EPG information display method according to claim 1, wherein said zoom command stepwisely changes a size from the channel and the time frame displayed immediately before the zoom command is provided to a channel and a time frame displayed after the zoom command is provided.

11. An EPG information display method according to claim 1, wherein said zoom command zooms in or out the screen with respect to EPG information of the displayed EPG information situated in the center.

12. An EPG information display method according to claim 1, wherein in a case where an EPG operation function mode is a search mode, when an area in which EPG information of a program is displayed is selected and specified, said areas of programs associated with said program are shown in a different color or brightness.

13. An EPG information display method according to claim 12, wherein under a condition where the EPG operation function mode is the search mode, a cursor for selecting and specifying an area corresponding to a search result selectively moves among parts of said areas in which EPG information is displayed which areas are shown in the different color.

14. An EPG information display method according to claim 12, wherein said associated programs are rebroadcasts or programs of the same genre.

15. An EPG information display method according to claim 1, wherein when an EPG operation function mode is a search mode, said EPG information is displayed in a manner such that, of search results, only said programs fulfilling said search criterion are displayed so as to be close to one another in a direction of a time axis and/or a channel axis.

16. An EPG information display method according to claim 1, wherein a function to operate in conjunction with a recorder is provided, and in an area in which EPG information of a program of which recording is associated with said recorder is displayed, recording condition information for said recorder is displayed so as to be superimposed on said EPG information.

17. An EPG information display method according to claim 1, wherein a recorder is provided, and an area in which EPG information of a program of which recording is associated with said recorder is displayed is displayed in a different color or brightness.

18. An EPG information display method according to claim 16, wherein said condition information for said recorder is information representing a type of said recorder, that recording is underway, that recording is finished and that programming of timer recording is finished.

19. A recorder/reproducer for recording and reproducing a program corresponding to EPG information displayed by an EPG information display method in which all or some of EPG information of a predetermined channel and time frame is displayed,
in response to a predetermined zoom command, EPG information of channels or time frames larger or smaller in number than channels or time frames displayed immediately before the zoom command is provided is displayed, and
in doing this, an amount of information in accordance with a magnification of said zoom command is selected and displayed, wherein in a case where an EPG operation function mode is a recording/reproduction mode, when an area in which EPG information of a program that has already been recorded is displayed is selected, reproduction of the corresponding program is started.

20. A recorder/reproducer for recording and reproducing a program corresponding EPG information displayed by an EPG information display method in which all or some of EPG information of a predetermined channel and time frame is displayed,
in accordance with a zoom magnification of a predetermined zoom command, EPG information of channels or time frames larger or smaller in number than channels or time frames displayed immediately before the zoom command is provided is displayed, and
in doing this, an amount of information in accordance with a degree of zooming is selected and displayed, wherein in a case where an EPG operation function mode is a recording/reproduction mode, when an area in which future EPG information is displayed is selected, timer recording of the corresponding program is programmed.

21. A recorder/reproducer according to claim 19 or 20, wherein as a method of controlling a recorder corresponding to the EPG information, a serial bus interface defined by IEEE1394-1995 is used.

22. A recorder/reproducer according to claim 19 or 20, wherein as a method of transmitting video data, sound data or additional data of a program corresponding to the EPG information from a recorder that records or reproduces said program, a serial bus interface defined by IEEE1394-1995 is used.

23. An EPG information display apparatus comprising:
zoom means;
display means where all or some of EPG information of a channel and a time frame predetermined by said zoom means is displayed, and in response to a predetermined zoom command, EPG information of channels or time frames larger or smaller than channels or time frames displayed immediately before the zoom command is provided is displayed; and
EPG information extracting means for, when EPG information is displayed, selecting and displaying an amount of information in accordance with a magnification of the zoom command of said zoom means,
wherein when said EPG information is displayed, for said predetermined channel and time frame, a picture is displayed instead of the EPG information on said display means.

24. A program recording medium that stores a program to cause a computer to perform all or some of functions of said EPG information display method, said EPG information display apparatus and said recorder/reproducer according to any of claims 1 to 23.
